# EUROPÄISCHE PATENTSCHRIFT

(11) **EP 3 829 010 B1**
(45) Veröffentlichungstag und Bekanntmachung des Hinweises auf die Patenterteilung: **04.12.2024**
(21) Anmeldenummer: 19211525.1
(22) Anmeldetag: 26.11.2019
(51) Int. Cl.: H02B 1/21, H01H 85/00

(54) **ADAPTERVORRICHTUNG FÜR STROMSAMMELSCHIENENSYSTEME**
ADAPTER DEVICE FOR BUSBAR SYSTEMS
DISPOSITIF ADAPTATEUR POUR SYSTÈMES DE BARRES OMNIBUS

(43) Veröffentlichungstag der Anmeldung: 02.06.2021
(73) Patentinhaber: Wöhner GmbH & Co. KG Elektrotechnische Systeme, 96472 Rödental (DE)
(72) Erfinder: MASEL, Joram, 96328 Küps (DE); HENNING, Hans-Jürgen, 96237 Ebersdorf (DE)
(74) Vertreter: Bratovic, Nino Maria

(56) Entgegenhaltungen:
- EP-A1- 0 593 399
- EP-A1- 2 911 253
- EP-A1- 3 187 886
- EP-A2- 0 753 916
- EP-A2- 1 045 497
- DE-A1- 102005 009 856
- ES-A1- 2 306 573

## Beschreibung

Die Erfindung betrifft eine Adaptervorrichtung für verschiedenartige Stromsammelschienensysteme, die es erlaubt, elektrische Geräte, welche für ein bestimmtes Stromsammelschienen-Subsystem ausgelegt sind, auch an ein andersartiges Stromsammelschienen-Hauptsystem anzuschließen.

Stromsammelschienen umfassen eine Anordnung von Stromleitern, die zur Verteilung elektrischer Energie dienen können. Stromsammelschienen können beispielsweise aus Aluminium oder Kupfer gefertigt werden. An Stromsammelschienen können ein oder mehrere elektrische Geräte, insbesondere Schaltgeräte, montiert werden. In vielen Fällen sind die Stromsammelschienen in abschließbaren Schaltschränken verlegt, da herkömmliche Stromsammelschienen selbst keinen Berührungsschutz bieten. Stromsammelschienen können sowohl Wechsel- als auch Gleichspannungen übertragen. Mehrere Stromsammelschienen können parallel zueinander montiert werden und verschiedene Stromphasen, beispielsweise L1, L2, L3, eines Stromversorgungssystems transportieren. Darüber hinaus können Stromsammelschienen auch Nullleiter N oder Schutzleiter PE bilden. Die räumlichen Abmessungen können für verschiedene Stromsammelschienensysteme unterschiedlich sein. Stromsammelschienen mit einem großem Querschnitt eignen sich zum Transport von Strömen mit hohen Nennstromstärken. Auch der Abstand verschiedener parallel angeordneter Stromsammelschienen kann bei unterschiedlichen Stromsammelschienen unterschiedlich sein. Weiterhin können auch Hybrid-Stromsammelschienen vorgesehen werden, welche über Kontaktschlitze verfügen.

Die elektrische Verbindung bzw. Kombination unterschiedlicher Stromsammelschienensysteme erfordert herkömmlicherweise einen erheblichen Aufwand hinsichtlich Montage und Verdrahtung. Darüber hinaus sind die Verbindungsstellen zwischen herkömmlichen Stromsammelschienensystemen in vielen Fällen nicht berührungssicher. Ein weiterer Nachteil einer herkömmlichen Verdrahtung von unterschiedlichen Stromsammelschienensystemen besteht darin, dass die Verbindung nicht sicher während des Betriebes bzw. unter Spannung erfolgen kann.

Aus der EP 2 911 253 A1 ist des Weiteren ein Sammelschienenadapter bekannt, aufweisend ein Adapter-Unterteil, wobei das Adapter-Unterteil einen Boden mit Aufnahmen zur Aufnahme von Verbindungsschienen aufweist, welche mit Sammelschienen elektrisch kontaktierbar sind. Die Verbindungsschienen sind mit wenigstens einem an dem Adapter-Oberteil des Sammelschienenadapter befestigbaren elektrischen Gerät elektrisch verbindbar.

Es ist daher eine Aufgabe der vorliegenden Erfindung, eine Adaptervorrichtung zu schaffen, welche es erlaubt, unterschiedliche Stromsammelschienensysteme miteinander sicher und flexibel zu verbinden.

Diese Aufgabe wird erfindungsgemäß durch eine Adaptervorrichtung mit den in Patentanspruch 1 angegebenen Merkmalen gelöst.

Die Erfindung schafft demnach eine Adaptervorrichtung gemäß Anspruch 1.

Die Adaptervorrichtung hat den Vorteil, dass keine manuelle Verdrahtung zwischen den verschiedenen Stromsammelschienensystemen erforderlich ist, sodass der Montageaufwand sinkt.

Darüber hinaus bietet die erfindungsgemäße Adaptervorrichtung eine sichere und zuverlässige elektrische Verbindung zwischen unterschiedlichen Stromsammelschienensystemen.

Ein weiterer Vorteil der erfindungsgemäßen Adaptervorrichtung besteht darin, dass die Verbindung zwischen verschiedenen Stromsammelschienensystemen auch während des laufenden Betriebes bzw. unter Spannung erfolgen kann.

Bei einer möglichen Ausführungsform der erfindungsgemäßen Adaptervorrichtung weist das Adaptergehäuse der Adaptervorrichtung zwei voneinander trennbare Adaptergehäusehälften auf, die miteinander mechanisch und elektrisch verbunden sind.

Bei einer möglichen Ausführungsform der erfindungsgemäßen Adaptervorrichtung umfassen die beiden Adaptergehäusehälften eine erste Adaptergehäusehälfte an der Gehäuserückseite des Adaptergehäuses, welche die Stromsammelschienen-Hauptschnittstelle zur elektromechanischen Kontaktierung von Stromsammelschienen des Stromsammelschienen-Hauptsystems aufweist, und eine zweite Adaptergehäusehälfte an der Gehäusevorderseite des Adaptergehäuses, welche die Stromsammelschienen-Subschnittstellen mit den in dem Adaptergehäuse integrierten oder an dem Adaptergehäuse angebrachten Stromsammelschienen der verschiedenen Stromsammelschienen-Subsysteme aufweist.

Bei einer weiteren möglichen Ausführungsform der erfindungsgemäßen Adaptervorrichtung weist die an der Gehäuserückseite des Adaptergehäuses vorgesehene Stromsammelschienen-Hauptschnittstelle für jede Stromsammelschiene des Stromsammelschienen-Hauptsystems ein zugehöriges Kontaktbauelement zur Kontaktierung der entsprechenden Stromsammelschiene des Stromsammelschienen-Hauptsystems auf.

Bei einer möglichen Ausführungsform der erfindungsgemäßen Adaptervorrichtung sind an das Kontaktbauelement mehrere Stromsammelschienen verschiedener an der Gehäusevorderseite des Adaptergehäuses vorgesehener Stromsammelschienen-Subsysteme über in dem Adaptergehäuse der Adaptervorrichtung enthaltene elektrische Leiter parallel elektrisch angeschlossen. Diese elektrischen Leiter können elektrische Leitungen oder Schienen umfassen.

Bei einer weiteren möglichen Ausführungsform der erfindungsgemäßen Adaptervorrichtung weisen die in dem Adaptergehäuse integrierten Stromsammelschienen der Stromsammelschienen-Subschnittstellen jeweils Schlitz-Stromsammelschienen, Hybrid-Stromsammelschienen oder massive Stromsammelschienen auf.

Bei einer möglichen Ausführungsform der erfindungsgemäßen Adaptervorrichtung umfassen die Hybrid-Stromsammelschienen der mindestens einen Stromsammelschienen-Subschnittstelle jeweils ein stromführendes Schienenprofil und ein kontaktaufnehmendes Schienenprofil, das gleichmäßig beabstandete Kontaktschlitze zur Aufnahme von elektrischen Kontakten eines elektrischen Gerätes aufweist.

Bei der erfindungsgemäßen Adaptervorrichtung weist eine Wandung an der Gehäusevorderseite des Adaptergehäuses im Bereich der Stromsammelschienen-Subschnittstelle Durchführschlitze zum Hindurchführen elektrischer Kontakte eines anzuschließenden elektrischen Gerätes auf, die in darunterliegende Kontaktschlitze einer in dem Adaptergehäuse integrierten Schlitz-Stromsammelschiene oder Hybrid-Stromsammelschiene zur elektrischen Kontaktierung der Stromsammelschienen des Stromsammelschienen-Hauptsystems einführbar sind.

Bei einer weiteren möglichen Ausführungsform der erfindungsgemäßen Adaptervorrichtung ist das Adaptergehäuse der Adaptervorrichtung länglich ausgebildet und weist an der Gehäuserückseite entlang einer Längsachse des Adaptergehäuses mehrere übereinander angeordnete Kontaktbauelemente zur Kontaktierung mehrerer parallel in horizontaler Richtung verlaufender Stromsammelschienen des Stromsammelschienen-Hauptsystems auf.

Bei einer weiteren möglichen Ausführungsform der erfindungsgemäßen Adaptervorrichtung ist die erste an der Rückseite vorgesehene Gehäusehälfte des Adaptergehäuses mit der Stromsammelschienen-Hauptschnittstelle zur elektromechanischen Kontaktierung der Stromsammelschienen des Stromsammelschienen-Hauptsystems auf den Stromsammelschienen des Stromsammelschienen-Hauptsystems fest montiert.

Bei einer weiteren möglichen Ausführungsform der erfindungsgemäßen Adaptervorrichtung ist die zweite an der Gehäusevorderseite des Adaptergehäuses vorgesehene Adaptergehäusehälfte, welche die Stromsammelschienen-Subschnittstellen aufweist, von der an die Stromsammelschienen des Stromsammelschienen-Hauptsystems fest montierten ersten Adaptergehäusehälfte mechanisch lösbar und nach Rotation um 180° entlang einer Quer- bzw. Rotationsachse des Adaptergehäuses wieder mit der ersten Adaptergehäusehälfte mechanisch verbindbar.

Durch die Drehung können auch Leitungen angeschlossen werden, die in einem Schaltschrank von oben an die Adaptervorrichtung herangeführt werden.

Bei einer weiteren möglichen Ausführungsform der erfindungsgemäßen Adaptervorrichtung weist das Stromsammelschienen-Hauptsystem eine Anzahl von mindestens zwei Stromsammelschienen für unterschiedliche Stromphasen auf, die in horizontaler Richtung parallel zueinander verlaufen und die jeweils durch mindestens ein Kontaktbauelement des an der Gehäuserückseite des Adaptergehäuses vorgesehenen Stromsammelschienen-Hauptsystems zur Herstellung einer elektrischen Verbindung mit einer entsprechenden Anzahl von an der Gehäusevorderseite in dem Adaptergehäuse integrierten Stromsammelschienen verschiedener Stromsammelschienen-Subsysteme elektromechanisch kontaktierbar sind.

Bei einer weiteren möglichen Ausführungsform der erfindungsgemäßen Adaptervorrichtung weisen die auf die Stromsammelschienen-Subschnittstellen aufgesetzten elektrischen Geräte Abgangsleitungen auf, welche durch Durchführtunnel von Stromsammelschienen-Subschnittstellen hindurch in Richtung der Längsachse des Adaptergehäuses hin zu einer Stirnseite des Adaptergehäuses führbar sind.

Bei einer weiteren möglichen Ausführungsform der erfindungsgemäßen Adaptervorrichtung sind an mindestens einer Stirnseite des Adaptergehäuses Tragschienen zum Anbringen von Anschlussklemmblöcken oder sonstigen Zubehörteilen vorgesehen.

Bei einer weiteren möglichen Ausführungsform der erfindungsgemäßen Adaptervorrichtung weisen die auf die Stromsammelschienen-Subschnittstellen der Adaptervorrichtung aufgesetzten elektrischen Geräte Sicherungs-Lasttrennschalter auf, die zwischen den Stromsammelschienen des Stromsammelschienen-Hauptsystems und elektrischen Verbrauchsgeräten, welche an Anschlussklemmen von Anschlussklemmblöcken angeklemmt sind, verschaltet sind und die bei ihrer manuellen Betätigung die elektrischen Verbrauchsgeräte von den Stromsammelschienen des Stromsammelschienen-Hauptsystems trennen oder mit ihnen verbinden.

Durch Verwendung der Anschlussklemmblöcke kann eine komfortable Anschlusssituation erreicht werden. Die Leitungen müssen nur an die Anschlussklemmblöcke angeschlossen werden und nicht kompliziert durch den Adapter bzw. das Adaptergehäuse an die Geräte herangeführt werden. Durch Drehung des Adaptervorderteils bzw. der vorderen Adaptergehäusehälfte um 180° können dann auch Leitungen angeschlossen werden, die in einem Schaltschrank von oben herangeführt werden. Die Anschlussklemmblöcke können bei einer möglichen Ausführungsform in der Adaptervorrichtung integriert sein oder als Zubehörteil auf die Adaptervorrichtung montiert werden.

Bei einer weiteren möglichen Ausführungsform der erfindungsgemäßen Adaptervorrichtung weisen die Stromsammelschienen des Stromsammelschienen-Hauptsystems eine von der Nennstromstärke der Stromsammelschienen der Stromsammelschienen-Subsysteme unterschiedliche Nennstromstärke auf.

Bei einer weiteren möglichen Ausführungsform der erfindungsgemäßen Adaptervorrichtung sind in dem Adaptergehäuse der Adaptervorrichtung Strom- und/oder Spannungsmesseinheiten für jede Stromsammelschiene des Stromsammelschienen-Hauptsystems integriert.

Außerdem ist eine Strommessung auf einer Zugangsseite der Subsysteme möglich. Eine weitere Strommessung ist auch auf der Abgangsebene der Subsysteme möglich.

Im Weiteren werden mögliche Ausführungsformen der erfindungsgemäßen Adaptervorrichtung unter Bezugnahme auf die beigefügten Figuren näher erläutert.

Es zeigen:
- Fig. 1: eine beispielhafte Anordnung mit zwei auf einem Berührungsschutzsystem aufgesetzten Adaptervorrichtungen gemäß der Erfindung;
- Fig. 2: eine Seitenansicht auf die in Fig. 1 dargestellte Anordnung von links;
- Fig. 3: eine Ansicht auf die in Fig. 1 dargestellte Anordnung von unten;
- Fig. 4: eine isometrische Ansicht der in Fig. 1 dargestellten Anordnung;
- Fig. 5: eine Vorderansicht auf eine Ausführungsform der erfindungsgemäßen Adaptervorrichtung ohne darauf aufgesetzte elektrische Geräte bzw. Komponenten;
- Fig. 6: eine Seitenansicht von links auf das in Fig. 5 dargestellte Ausführungsbeispiel einer erfindungsgemäβen Adaptervorrichtung;
- Fig. 7: eine isometrische Ansicht auf die in Fig. 5 dargestellte Adaptervorrichtung;
- Fig. 8: eine Ansicht von unten auf die in Fig. 5 dargestellte Adaptervorrichtung;
- Fig. 9: eine Ansicht von unten auf eine Stirnseite einer Adaptervorrichtung, die mit vier NH00-SicherungsLasttrennschaltern und mit vier Klemmblöcken bestückt ist und auf einem berührungsgeschützten Stromsammelschienensystem montiert ist;
- Fig. 10: eine isometrische Ansicht der in Fig. 9 dargestellten Anordnung;
- Fig. 11: eine Ansicht von unten auf eine erfindungsgemäße Adaptervorrichtung ohne darauf aufgesetzte elektrische Geräte bzw. Komponenten, wobei die Adaptervorrichtung auf einem berührungsgeschützten Stromsammelschienensystem aufgesetzt ist;
- Fig. 12: eine isometrische Ansicht auf die in Fig. 11 dargestellte Anordnung;
- Fig. 13: eine isometrische Detailansicht der unteren Hälfte einer erfindungsgemäßen Adaptervorrichtung ohne aufgesetzte Komponenten bzw. elektrische Geräte;
- Fig. 14: eine isometrische Ansicht einer erfindungsgemäßen Adaptervorrichtung mit vier aufgesetzten NH000-Sicherungs-Lasttrennschaltern und vier Anschlussklemmblöcken einschließlich der dazwischen verlegten Abgangsleitungen;
- Fig. 15: eine isometrische Ansicht des unteren Teils der in Fig. 14 dargestellten Adaptervorrichtung mit vier NH000-Sicherungs-Lasttrennschaltern und vier Anschlussklemmblöcken;
- Fig. 16: eine Schnittansicht einer erfindungsgemäßen Adaptervorrichtung auf einem berührungsgeschützten Sammelschienensystem;
- Fig. 17: eine Schnittansicht einer erfindungsgemäßen Adaptervorrichtung ohne aufgesetzte Komponenten bzw. elektrische Geräte;
- Fig. 18: eine Detailansicht zur Darstellung einer Verriegelung zwischen zwei Adaptergehäusehälften eines Adaptergehäuses der erfindungsgemäßen Adaptervorrichtung;
- Fig. 19: eine Schnittansicht durch einen Leitungsdurchführtunnel, welcher unterhalb einer Stromsammelschienen-Subschnittstelle einer erfindungsgemäßen Adaptervorrichtung verläuft;
- Fig. 20: eine isometrische Ansicht von links oben auf ein Ausführungsbeispiel einer erfindungsgemäßen Adaptervorrichtung ohne aufgesetzte Komponenten bzw. elektrische Geräte, wobei die obere Adaptergehäusehälfte von der unteren Adaptergehäusehälfte getrennt ist;
- Fig. 21: eine isometrische Ansicht auf ein Ausführungsbeispiel einer erfindungsgemäßen Adaptervorrichtung mit voneinander getrennten Adaptergehäusehälften;
- Fig. 22: eine weitere isometrische Ansicht auf eine erfindungsgemäße Adaptervorrichtung, wobei die obere Adaptergehäusehälfte entlang einer Rotationsachse um 180° gedreht ist;
- Fig. 23: eine isometrische Ansicht einer Adaptervorrichtung ohne aufgesetzte Komponenten, bei denen die obere Adaptergehäusehälfte um 180° gedreht ist;
- Fig. 24: eine isometrische Ansicht einer erfindungsgemäßen Adaptervorrichtung mit vier NH00-Sicherungs-Lasttrennschaltern, bei denen die obere Adaptergehäusehälfte um 180° gedreht ist;
- Fig. 25: eine isometrische Explosionsdarstellung von links unten der kompletten Adaptervorrichtung;
- Fig. 26: eine isometrische Explosionsdarstellung von rechts unten der kompletten Adaptervorrichtung;
- Fig. 27: eine isometrische Darstellung von links unten des vollständigen innerhalb des Adaptergehäuses vorhandenen Kontaktsystems;
- Fig. 28: eine isometrische Darstellung von rechts unten des vollständigen innerhalb des Adaptergehäuses vorhandenen Kontaktsystems;
- Fig. 29: eine isometrische Detaildarstellung eines Steckkontaktes, welches eine lösbare Verbindung zwischen einem Adapterunterteil und einem Adapteroberteil realisiert;
- Fig. 30: eine isometrische Darstellung von links oben auf einen Zugangskontaktbereich;
- Fig. 31: eine isometrische Darstellung eines Klemmbügels zur Kontaktierung eines berührungsgeschützten Stromsammelschienensystems;
- Fig. 32: eine isometrische Detailansicht eines Zugangskontaktbereichs mit einer installierten Strommesseinrichtung;
- Fig. 33: eine isometrische Ansicht einer möglichen Installation einer erfindungsgemäßen Adaptervorrichtung in einem Schaltschrank mit angedeuteter Schaltschrankblende;
- Fig. 34: eine isometrische Ansicht einer erfindungsgemäßen Adaptervorrichtung mit weiteren Komponenten;
- Fig. 35: eine isometrische Ansicht einer erfindungsgemäßen Adaptervorrichtung mit weiteren Komponenten;
- Fig. 36: eine isometrische Ansicht von rechts unten des im Adapter befindlichen Kontaktsystems;
- Fig. 37: zeigt eine perspektivische Ansicht auf eine mögliche Ausführungsform eines in dem Adaptergehäuse befindlichen Kontaktsystems mit massiven Stromsammelschienen der beiden Subsysteme;
- Fig. 38: zeigt eine weitere perspektivische Ansicht auf eine weitere mögliche Ausführungsform des innerhalb des Adapters befindlichen Kontaktsystems mit Hybrid-Stromsammelschienen der Subsysteme;
- Fig. 39: zeigt eine Ansicht von vorne auf eine Anordnung mit einer bestückten und unbestückten Adaptervorrichtung;
- Fig. 40: zeigt die in Fig. 39 dargestellte Anordnung aus perspektivischer Sicht;
- Fig. 41: zeigt eine weitere Ansicht auf eine mögliche erfindungsgemäße Anordnung mit einer bestückten und einer unbestückten Adaptervorrichtung;
- Fig. 42: eine perspektivische Ansicht auf die in Fig. 41 dargestellte Anordnung.

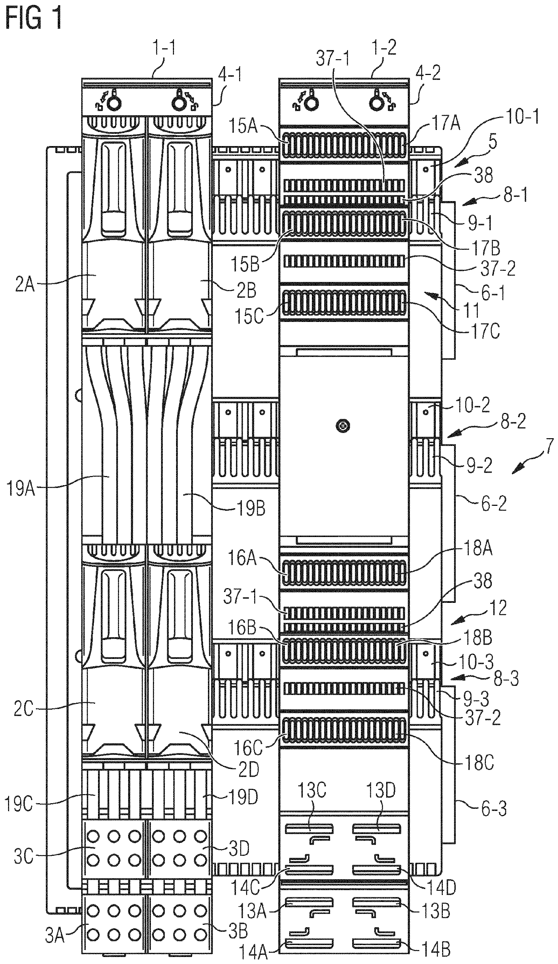

Fig. 1 zeigt eine beispielhafte Anordnung, bei der erfindungsgemäße Adaptervorrichtungen 1 vorgesehen sind, um unterschiedliche Stromsammelschienensysteme miteinander zu kombinieren bzw. elektrisch miteinander zu verbinden. Bei der in Fig. 1 dargestellten beispielhaften Anordnung sind zwei Adaptervorrichtungen 1-1, 1-2 vorgesehen. Fig. 1 zeigt eine Ansicht auf die beiden Adaptervorrichtungen 1-1, 1-2 von oben. Die in Fig. 1 dargestellte linke Adaptervorrichtung 1-1 ist in dem dargestellten Beispiel mit elektrischen Geräten bzw. Komponenten 2 bestückt und die in Fig. 1 rechts dargestellte zweite Adaptervorrichtung 1-2, welche nicht mit elektrischen Geräten bzw. Komponenten 2 bestückt ist. Die Adaptervorrichtung 1 gemäß der Erfindung dient zum Anschluss mindestens eines elektrischen Gerätes 2, das für ein bestimmtes Stromsammelschienen-Subsystem 11, 12 ausgelegt ist, an ein Stromsammelschienen-Hauptsystem 7. Bei der in Fig. 1 dargestellten Anordnung ist die dargestellte Adaptervorrichtung 1-1 mit vier elektrischen Geräten bzw. elektrischen Komponenten 2A, 2B, 2C, 2D bestückt. Für jedes bestückte bzw. aufgesetzte elektrische Gerät 2 ist an der Unterseite der Adaptervorrichtung 1 ein zugehöriger Anschlussklemmblock 3 vorgesehen, wie in Fig. 1 dargestellt. Dementsprechend weist die in Fig. 1 links dargestellte Adaptervorrichtung 1-1 vier Anschlussklemmblöcke 3A, 3B, 3C, 3D auf, die über Stromleitungen 19 mit den entsprechenden elektrischen Geräten bzw. Komponenten 2 verbunden sind. Anstatt der Strom- bzw. Abgangsleitungen 19 können bei einer weiteren Ausführungsform auch in dem Adaptergehäuse 4 der Adaptervorrichtung 1 integrierte Stromleiter bzw. Stromschienen vorgesehen werden, die auf Subsystemebene und am unteren Ende der Adaptervorrichtung 1 mit Leitungsanschlussklemmen versehen sind. So können auf Subsystemebene die Abgangsleitungen der Komponenten an den Leitungsanschlussklemmen der integrierten Abgangsschienen angeklemmt werden. An der Adaptergehäuseunterseite können wiederum die Abgangsleitungen zu den Verbrauchsgeräten angeklemmt werden.

Die beiden Adaptervorrichtungen 1-1, 1-2 verfügen jeweils über ein zugehöriges Adaptergehäuse 4-1, 4-2. Das Adaptergehäuse 4 der Adaptervorrichtung 1 besitzt an einer Gehäuserückseite eine Stromsammelschienen-Hauptschnittstelle zur elektromechanischen Kontaktierung von Stromsammelschienen 6 eines Stromsammelschienen-Hauptsystems 7. Bei dem in Fig. 1 dargestellten Ausführungsbeispiel befinden sich die Stromsammelschienen 6 des Stromsammelschienen-Hauptsystems 7 in einem Berührungsschutzsystem 5. Das elektrisch isolierende Berührungsschutzsystem 5 umschließt die Stromsammelschienen 6 des Stromsammelschienen-Hauptsystems 7. Das Berührungsschutzsystem 5 kann modular aufgebaut sein und mehrere Berührungsschutzmodule umfassen. Diese Berührungsschutzmodule weisen beispielsweise Haltefüße auf, die zum Hintergreifen der Stromsammelschienen 6 vorgesehen sind. Die verschiedenen Berührungsschutzmodule des Berührungsschutzsystems 5 können mit benachbarten Berührungsschutzmodulen verrastet sein und die Stromsammelschienen 6-i des Stromsammelschienen-Hauptsystems 7 flächig bedecken. Die verschiedenen Berührungsschutzmodule des Berührungsschutzsystems 5 weisen bei der in Fig. 1 dargestellten Ausführungsform Klemmenaufnahmebereiche 8-i zur Aufnahme von Anschlussklemmen auf. Diese Anschlussklemmen sind zur elektrischen Kontaktierung der unterhalb der Berührungsschutzmodule des Berührungsschutzsystems 5 liegenden Stromsammelschienen 6-i des Stromsammelschienen-Hauptsystems 7 vorgesehen. Bei dem in Fig. 1 dargestellten Ausführungsbeispiel ist das Berührungsschutzsystem 5 für drei parallel verlaufende Stromsammelschienen 6-1, 6-2, 6-3 des Stromsammelschienen-Hauptsystems 7 vorgesehen. Dementsprechend weist jedes Berührungsschutzmodul des Berührungsschutzsystems 5 drei Klemmenaufnahmebereiche 8-1, 8-2, 8-3 auf. Bei der dargestellten beispielhaften Anordnung können die Stromsammelschienen 6 beispielsweise durch Stromsammelschienenträger 26 an einer Wand oder innerhalb eines Gehäuses oder eines Schaltschrankes angebracht sein. Bei dem in Fig. 1 dargestellten Ausführungsbeispiel verlaufen die Stromsammelschienen 6-i des Stromsammelschienen-Hauptsystems 7 in horizontaler Richtung. Beispielsweise kann es sich bei den Stromsammelschienen 6 des Stromsammelschienen-Hauptsystems 7 um massive Stromsammelschienen mit einem rechteckigen Querschnitt handeln, der es erlaubt, elektrische Ströme mit einer hohen Nennstromstärke zu übertragen. Die verschiedenen Berührungsschutzmodule des Berührungsschutzsystems 5 können bei einer möglichen Ausführungsform auf die mehreren in horizontaler Richtung parallel angeordneten Stromsammelschienen 6-i derart aufgeschoben werden, dass die Haltefüße der Berührungsschutzmodule die Stromsammelschienen 6 hintergreifen. Die verschiedenen Klemmenaufnahmebereiche 8-i weisen bei dem in Fig. 1 dargestellten Ausführungsbeispiele parallel angeordnete Kontaktierungsschlitze 9 auf, wie in Fig. 1 dargestellt. Die Kontaktierungsschlitze 9 dienen zur elektrischen Kontaktierung der darunterliegenden Stromsammelschienen 6 mittels Anschlussklemmen bzw. Anschlussbauelementen. Die Kontaktierungsschlitze 9 sind vorzugsweise derart ausgebildet, dass sie eine einheitliche Teilung mehrerer miteinander verrasteter Berührungsschutzmodule des Berührungsschutzsystems 5 bereitstellen. Weiterhin weisen die Klemmenanschlussbereiche 8-1, 8-2, 8-3 bei dem in Fig. 1 dargestellten Ausführungsbeispiel flachförmig angeschrägte Einführeinrichtungen 10-i auf, die zum Einführen von Klemmbügeln der Anschlussklemmen vorgesehen sind. Die verschiedenen Module des Berührungsschutzsystems 5 bestehen vorzugsweise aus einem elektrisch isolierenden, wärmestabilen und feuerhemmenden Material. Bei dem in Fig. 1 dargestellten Ausführungsbeispiel ist das Stromsammelschienen-Hauptsystem 7 ein berührungsgeschütztes 185 mm-Sammelschienensystem zur Übertragung hoher elektrischer Leistungen.

Jede der beiden Adaptervorrichtungen 1-1, 1-2 besitzt ein Adaptergehäuse 4-1, 4-2, welches ebenfalls aus einem elektrisch isolierenden Material besteht. Das Adaptergehäuse 4 der Adaptervorrichtung 1 besitzt an einer Gehäuserückseite eine Stromsammelschienen-Hauptschnittstelle zur elektromechanischen Kontaktierung von Stromsammelschienen 6 des Stromsammelschienen-Hauptsystems 7. Ferner besitzt das Adaptergehäuse 4 der Adaptervorrichtung 1 an einer Gehäusevorderseite eine oder mehrere Stromsammelschienen-Subschnittstellen. Diese Stromsammelschienen-Subschnittstellen dienen zum Aufsetzen von mindestens einem elektrischen Gerät 2 auf die Adaptervorrichtung 1 von vorne sowie zu dessen elektrischer Verbindung mit dem Stromsammelschienen-Hauptsystem 7 über die in dem Adaptergehäuse 4 integrierte Stromsammelschienen des jeweiligen Stromsammelschienen-Subsystems 11, 12 sowie über in dem Adaptergehäuse 4 verlaufende bzw. enthaltene elektrische Leitungen bzw. Schienen 28.

Bei dem in Fig. 1 dargestellten Ausführungsbeispiel verfügt die Adaptervorrichtung 1 an ihrer Vorderseite über zwei Stromsammelschienen-Subsysteme 11, 12 mit entsprechenden Subschnittstellen. Bei dem in Fig. 1 dargestellten Ausführungsbeispiel handelt es sich um ein Subsystem mit Schlitz-Stromsammelschienen. Wie in Fig. 1 dargestellt, verfügt jede der beiden Adaptervorrichtungen 1-i über ein erstes oberes Stromsammelschienen-Subsystem 11 und ein zweites unteres Stromsammelschienen-Subsystem 12. Die in Fig. 1 links dargestellte Adaptervorrichtung 1-1 ist vollständig mit elektrischen Geräten bzw. Komponenten 2A bis 2D bestückt. Dabei sind zwei erste elektrische Komponenten bzw. Geräte 2A, 2B auf der oberen Stromsammelschienen-Subschnittstelle des Stromsammelschienen-Subsystems 11 und die beiden elektrischen Geräte 2C, 2D auf der Stromsammelschienen-Subschnittstelle des zweiten Stromsammelschienen-Subsystems 12 aufgesetzt. Jede Stromsammelschienen-Subschnittstelle eignet sich zur Aufnahme von mindestens einem elektrischen Gerät 2, beispielsweise eines Sicherungs-Lasttrennschalters. Für jedes aufgesetzte elektrische Gerät 2 kann ein entsprechender Anschlussklemmblock 3 vorgesehen sein, wie in Fig. 1 für die linke Adaptervorrichtung 1-1 dargestellt. Diese Anschlussklemmblöcke 3 können bei einer möglichen Ausführungsform auf Tragschienen 13, 14 aufgesetzt bzw. aufgeschoben sein. Beispielsweise können für jeden Anschlussklemmblock 3 zwei Tragschienen bzw. Hutschienen zum Anbringen des entsprechenden Anschlussklemmblocks 3 vorgesehen sein. Bei der in Fig. 1 dargestellten Anordnung ist die rechte Adaptervorrichtung 1-2 nicht mit elektrischen Geräten 2 bestückt und besitzt auch keine entsprechenden Anschlussklemmblöcke 3, sodass die Tragschienen 13, 14 von vorne in Fig. 1 erkennbar sind. Bei dem in Fig. 1 dargestellten Ausführungsbeispiel befinden sich die Tragschienen 13, 14 zum Anbringen der Anschlussklemmblöcke 3 an der unteren Stirnseite des Adaptergehäuses 4 der Adaptervorrichtung 1.

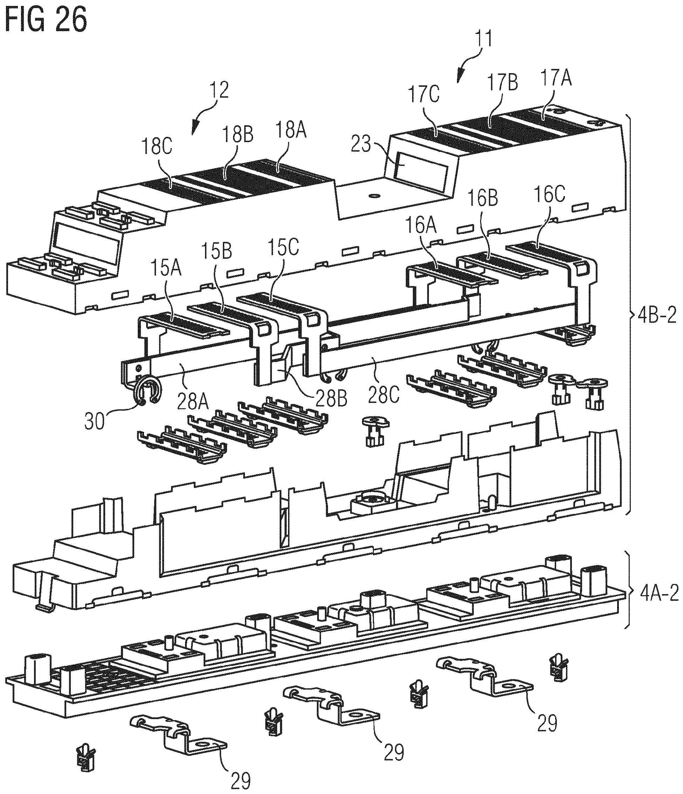

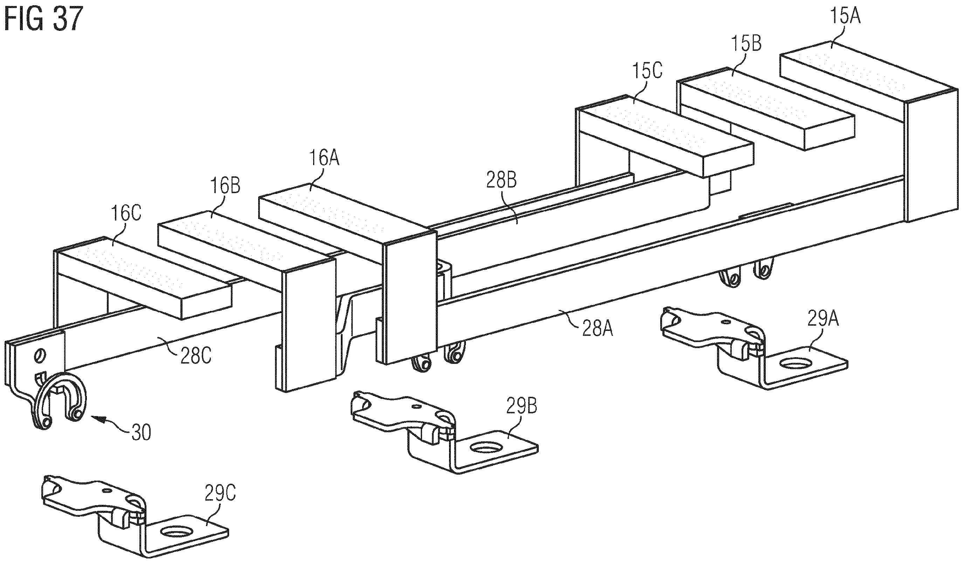

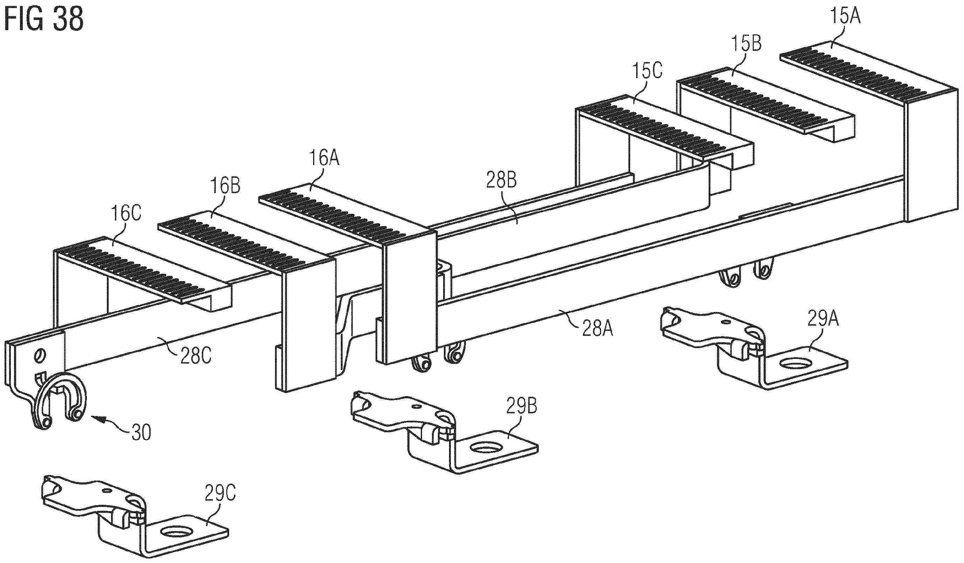

Das Adaptergehäuse 4 weist an seiner Gehäusevorderseite bei dem dargestellten Beispiel zwei Stromsammelschienen-Subschnittstellen der beiden Stromsammelschienen-Subsysteme 11, 12 auf. Diese dienen zum Aufsetzen von mindestens einem elektrischen Gerät auf die Adaptervorrichtung 1 und zu dessen elektrischer Verbindung mit den an der Rückseite innerhalb des Berührungsschutzsystems 5 verlaufender Stromsammelschienen 6 des Stromsammelschienen-Hauptsystems 7. Diese elektrische Verbindung wird einerseits über die in dem Adaptergehäuse 4 integrierten Stromsammelschienen 15, 16 des jeweiligen Stromsammelschienen-Subsystems 11, 12 sowie über in dem Adaptergehäuse 4 verlaufende interne elektrische Leitungen bzw. Schienen 28 hergestellt. Bei dem in Fig. 1 dargestellten Ausführungsbeispiel weisen die in dem Adaptergehäuse 4 integrierten Stromsammelschienen 15, 16 jeweils Hybrid-Stromsammelschienen auf. Das erste obere Stromsammelschienen-Subsystem 11 umfasst bei dem dargestellten Ausführungsbeispiel drei in dem Adaptergehäuse integrierte Stromsammelschienen 15A, 15B, 15C. Das zweite untere Stromsammelschienensystem 12 umfasst ebenfalls drei parallel angeordnete integrierte Stromsammelschienen 16A, 16B, 16C, die parallel unterhalb der in Fig. 1 von vorne erkennbaren Kontaktierungsschlitzen 17, 18 verlaufen. Die Stromsammelschienen 15, 16 der Subsysteme 11, 12 können Schlitz-Stromsammelschienen (Fig. 26, Fig. 27, Fig. 36), massive Stromsammelschienen (Fig. 37) oder auch Hybrid-Stromsammelschienen (Fig. 38) umfassen. Die Anzahl der Stromsammelschienen 15, 16 der beiden Stromsammelschienen-Subschnittstellen 11, 12 kann bei einer möglichen Ausführungsform der Anzahl der Stromsammelschienen 6-i des Stromsammelschienen-Hauptsystems 7 entsprechen. Jede Stromsammelschiene 15, 16 der beiden Stromsammelschienen-Subschnittstellen der Stromsammelschienen-Subsysteme 11, 12 umfasst jeweils vorzugsweise ein stromführendes Schienenprofil und ein kontaktaufnehmendes Schienenprofil. Das stromführende Schienenprofil der in dem Adaptergehäuse 4 integrierten Stromsammelschiene 15, 16 dient im Wesentlichen zum Transport eines elektrischen Stromes. Das damit verbundene kontaktaufnehmende Schienenprofil der Stromsammelschiene 15, 16 weist vorzugsweise gleichmäßig beabstandete Kontaktschlitze bzw. Kontaktöffnungen zur Aufnahme von hervorstehenden elektrischen Kontakten eines elektrischen Gerätes 2 auf. Die Wandung an der Gehäusevorderseite des Adaptergehäuses 4 weist im Bereich der Stromsammelschienen-Subschnittstellen Durchführschlitze 17A, 17B, 17C bzw. 18A, 18B, 18C auf. Diese Durchführschlitze 17, 18 dienen zum Hindurchführen der elektrischen Kontakte eines anzuschließenden elektrischen Gerätes 2, die in direkt darunterliegende Kontaktschlitze der in dem Adaptergehäuse 4 integrierten Stromsammelschiene 15, 16 einführbar bzw. einsteckbar sind. Hierdurch kann eine elektrische Kontaktierung eines elektrischen Gerätes 2 mit den Stromsammelschienen 15, 16 des betreffenden Stromsammelschienen- Subsystems 11, 12 erreicht werden, die ihrerseits intern über integrierte Leitungen bzw. Bügel mit den entsprechenden Stromsammelschienen 6-1, 6-2, 6-3 des Stromsammelschienen-Hauptsystems 7 elektrisch verbunden sind. Auf diese Weise werden elektrische Geräte 2, die in eine Stromsammelschienen-Subschnittstelle eingesteckt werden, elektrisch mit dem in dem Berührungsschutzsystem 5 enthaltenen Stromsammelschienen 6 des Stromsammelschienen-Hauptsystems 7 elektrisch verbunden.

Wie in Fig. 1 dargestellt, ist das Adaptergehäuse 4 der Adaptervorrichtung 1 länglich ausgebildet. Das Adaptergehäuse 4 kann an seiner Gehäuserückseite entlang seiner Längsachse mehrere übereinander angeordnete Kontaktbauelemente zur Kontaktierung der parallel in horizontaler Richtung verlaufenden Stromsammelschienen 6-i des Stromsammelschienen-Hauptsystems 7 aufweisen.

Das Adaptergehäuse 4 der Adaptervorrichtung 1 weist vorzugsweise zwei voneinander trennbare Adaptergehäusehälften auf, die miteinander mechanisch verbunden sind. Die beiden Adaptergehäusehälften umfassen eine erste Adaptergehäusehälfte 4A an der Gehäuserückseite des Adaptergehäuses 4 und eine zweite Adaptergehäusehälfte 4B an der Gehäusevorderseite des Adaptergehäuses 4. Die erste Adaptergehäusehälfte 4A an der Gehäuserückseite des Adaptergehäuses 4 weist eine Stromsammelschienen-Hauptschnittstelle zur elektromechanischen Kontaktierung der Stromsammelschienen 6 des Stromsammelschienen-Hauptsystems 7 auf. Die zweite Adaptergehäusehälfte 4B an der Gehäusevorderseite des Adaptergehäuses 4 umfasst die verschiedenen Stromsammelschienen-Subschnittstellen der Stromsammelschienen-Subsysteme 11, 12 mit in dem Adaptergehäuse 4 integrierten Stromsammelschienen 15, 16 der beiden Stromsammelschienen-Subsysteme 11, 12 oder an dem Adaptergehäuse 4 angebrachten Stromsammelschienen von Stromsammelschienen-Subsystemen.

Die an der Gehäuserückseite des Adaptergehäuses 4 vorgesehene Stromsammelschienen-Hauptschnittstelle weist für jede Stromsammelschiene 6 des Stromsammelschienen-Hauptsystems 7 vorzugsweise ein zugehöriges Kontaktbauelement zur Kontaktierung der entsprechenden Stromsammelschiene 6 des Stromsammelschienen-Hauptsystems 7 auf. Vorzugsweise sind an dieses Kontaktbauelement mehrere Stromsammelschienen 15, 16 verschiedener an der Gehäusevorderseite des Adaptergehäuses 4 vorgesehener Stromsammelschienen-Subsysteme 11, 12 über die in dem Adaptergehäuse 4 der Adaptervorrichtung 1 enthaltenen Leitungen parallel elektrisch angeschlossen. Bei dem in Fig. 1 dargestellten Ausführungsbeispiel weist das Stromsammelschienen-Hauptsystem 7 eine Anzahl von drei Stromsammelschienen 6 für unterschiedliche Stromphasen L1, L2, L3 auf, die in horizontaler Richtung parallel zueinander verlaufen und die jeweils durch mindestens ein Kontaktbauelement des an der Gehäuserückseite des Adaptergehäuses 4 vorgesehenen Stromsammelschienen-Hauptsystems 7 zur elektrischen Verbindung mit einer entsprechenden Anzahl von zwei an der Gehäusevorderseite in dem Adaptergehäuse 4 integrierten Stromsammelschienen 15, 16 der beiden Stromsammelschienen-Subsysteme 11, 12 elektromechanisch kontaktierbar sind. Beispielsweise führt die in Fig. 1 oben dargestellte erste Stromsammelschiene 6-1 eine Stromphase L1 und ist über die Adaptervorrichtung 1 einerseits mit der Stromsammelschiene 15A des oberen Stromsammelschienen-Subsystems 11 und andererseits mit der Stromsammelschiene 16A des unteren Stromsammelschienen-Subsystems 12 verbunden. In gleicher Weise kann die Stromsammelschiene 6-2 des Stromsammelschienen-Hauptsystems 7 über die Adaptervorrichtung 1 gleichzeitig parallel mit der zweiten Stromsammelschiene 15B des oberen Stromsammelschienen-Subsystems 11 und mit der zweiten Stromsammelschiene 16B des unteren zweiten Stromsammelschienen-Subsystems 12 elektrisch verbunden sein. Weiterhin ist in analoger Weise die dritte untere Stromsammelschiene 6-3 des Stromsammelschienen-Hauptsystems 7 mit den beiden in dem Adaptergehäuse 4 integrierten Stromsammelschienen 15C, 16C der beiden Stromsammelschienen-Subsysteme 11, 12 parallel verbunden. Der über die Stromsammelschiene 6-i des Stromsammelschienen-Hauptsystems 7 fließende elektrische Strom kann auf diese Weise auf zwei oder mehrere Stromsammelschienen-Subsysteme 11, 12 in einfacher Weise aufgeteilt werden. Bei dem in Fig. 1 dargestellten Beispiel umfassen die Stromsammelschienen 15, 16 der Stromsammelschienen-Subsysteme 11, 12 Schlitz-Stromsammelschienen. Alternativ können die Stromsammelschienen 15, 16 der Stromsammelschienen-Subsysteme 11, 12 auch herkömmliche massiv ausgebildete Stromsammelschienen oder Hybrid-Stromsammelschienen aufweisen, wobei der stromführende Querschnitt von dem Querschnitt der Stromsammelschienen 6-i des Hauptsystems 7 abweichen kann. Die Anzahl der Stromsammelschienen-Subsysteme 11, 12 kann je nach Anwendungsfall unterschiedlich sein. Beispielsweise kann die Adaptervorrichtung 1 auch drei oder mehr Stromsammelschienen-Subsysteme 11, 12 umfassen. Der Abstand der Stromsammelschienen 15, 16 des Stromsammelschienen-Subsystems 11, 12 kann beispielsweise 40 oder 60 mm umfassen. Bei dem Stromsammelschienen-Hauptsystem 7 kann es sich beispielsweise um ein 185 mm-Powersystem oder auch um ein andersartiges System, beispielsweise ein 60 mm-System oder ein 100 mm-System handeln. Bei den aufgesetzten bzw. bestückten elektrischen Geräten 2 kann es sich um verschiedenartige Geräte handeln, beispielsweise Sicherungs-Lasttrennschalter oder andersartige elektronische Geräte, beispielsweise Motorstarter oder dergleichen.

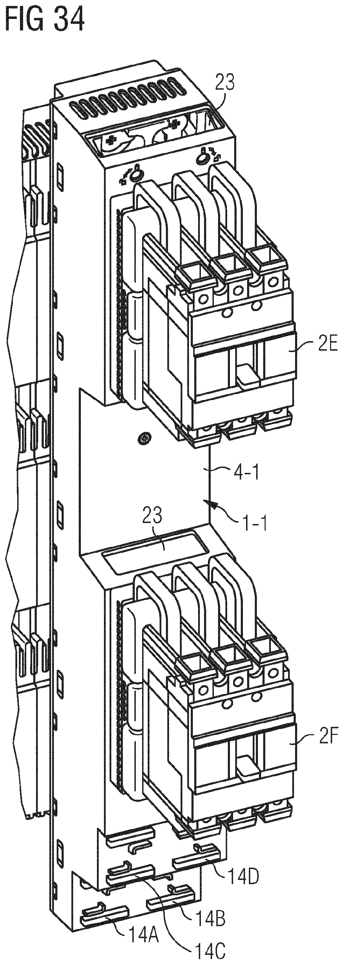

Auf dem Subsystem können wiederum Adapter für Leistungsschalter, Leistungsschutzschalter, Motorstarter und andere Komponenten aufgesetzt werden. Fig. 34 zeigt beispielsweise zwei Leistungsschalter 2E, 2F, die über zwei Adapter auf die Subsysteme aufgesetzt sind.

Die auf den Stromsammelschienen-Subschnittstellen aufgesetzten elektrischen Geräte 2 können bei einer möglichen Ausführungsform Abgangsleitungen 19 aufweisen, welche durch Durchführtunnel 23 von Stromsammelschienen-Subschnittstellen hindurch in Richtung der Längsachse des Adaptergehäuses 4 hin zu einer Stirnseite des Adaptergehäuses 4 geführt sind. Beispielsweise weisen die in Fig. 1 dargestellten elektrischen Geräte 2A, 2B, 2C, 2D der links dargestellten Adaptervorrichtung 1-1 4 Gruppen von Abgangsleitungen 19A, 19B, 19C, 19D auf, die nach unten entlang der Längsachse des Adaptergehäuses 4 hin zu der unteren Stirnseite verlaufen, wobei jede Gruppe drei Abgangsleitungen 19 pro Gerät 2 umfasst (d.h. insgesamt 3 x 4 = 12 Abgangsleitungen 19). An der unteren Stirnseite des Adaptergehäuses 4 befinden sich die Tragschienen 13, 14 zum Anbringen der zugehörigen Anschlussklemmblöcke 3A bis 3D. Bei dem in Fig. 1 dargestellten Beispiel ist die links dargestellte Adaptervorrichtung 1-1 mit vier elektrischen Sicherungs-Lasttrennschaltern 2A bis 2D bestückt. Diese sind zwischen den Stromsammelschienen 6 des Stromsammelschienen-Hauptsystems 7 und den Stromsammelschienen 15, 16 der Stromsammelschienen-Subsysteme 11, 12 einerseits und elektrischen Verbrauchsgeräten andererseits verschaltet. Die elektrische Verbrauchsgeräte (nicht dargestellt in Fig. 1) sind an Anschlussklemmen 27 der Anschlussklemmblöcke 3A bis 3D angeklemmt und können mithilfe der in Fig. 1 dargestellten Sicherungs-Lasttrennschalter 2 von den Stromsammelschienensystemen getrennt oder zugeschaltet werden. Hierzu weisen die Sicherungs-Lasttrennschalter 2A bis 2D jeweils manuell betätigbare Hebel 20 auf, die durch eine Bedienperson betätigbar sind. Beispielsweise sind in der oberen Stellung des Handhebels 20 die fest an die Anschlussklemmblöcke 3A bis 3D angeschlossenen nicht dargestellten Verbrauchsgeräte mit den Stromsammelschienen-Subsystemen 11, 12 verbunden und beziehen einen elektrischen Strom I von den Stromsammelschienen-Subsystemen 11, 12. Wird der Hebel 20 des Sicherungs-Lasttrennschalters 2 durch eine Bedienperson nach unten gezogen, wird das zugehörige elektrische Verbrauchsgerät von den zugehörigen Stromsammelschienen-Subsystemen 11, 12 und somit auch von dem Stromsammelschienen-Hauptsystem 7 getrennt. Die Stromsammelschienen 6 des Stromsammelschienen-Hauptsystems 7 weisen bei einer möglichen Ausführungsform eine Nennstromstärke auf, die von der Nennstromstärke der Stromsammelschienen der Stromsammelschienen-Subsysteme 11, 12 unterschiedlich ist. Beispielsweise sind die Stromsammelschienen 6 des Stromsammelschienen-Hauptsystems 7 für eine Nennstromstärke von 630 Ampere ausgelegt, während die Hybrid-Stromsammelschienen 15, 16 der Stromsammelschienen-Subsysteme 11, 12 eine Nennstromstärke von 160 Ampere aufweisen. In dem Adaptergehäuse 4 der Adaptervorrichtung 1 können für jede Stromsammelschiene zugehörige Messeinheiten bzw. Messeinrichtungen vorgesehen sein. Diese Messeinheiten umfassen beispielsweise Strommesseinheiten und/oder Spannungsmesseinheiten. Beispielsweise können an den Zugangsschienen ein Stromwandler oder eine sonstige Strommesseinrichtung eingebaut werden, welche einen Summenstrom der beiden Stromsammelschienen-Subsysteme 11, 12 umfasst. Weiterhin kann bei einer möglichen Ausführungsform ein Teilstrom pro Stromsammelschienen-Subsystem 11, 12 gemessen werden. Weiterhin können bei einer möglichen Ausführungsform die elektrischen Ströme pro Abgang mittels einer Strommesseinrichtung gemessen werden. Je nach Konfiguration können Strommessungen für unterschiedliche Stromabgänge an elektrische Verbrauchsgeräte implementiert werden. Die Kontaktierung der Stromsammelschienen kann in unterschiedlicher Weise erfolgen, beispielsweise durch Schraubverbindungen, Klemmkontakte für berührungsgeschützte Stromsammelschienen und/oder mithilfe von Klemmkontakten für nicht berührungsgeschützte Stromsammelschienen. Bei einer möglichen Ausführungsform kann ein Klemmkontakt mit einer Schraube gespannt werden oder besitzt einen selbst- oder fremdgefederten Sammelschienenkontakt.

Die Tragschienen oder Hutschienen 13A bis 13D bzw. 14A bis 14D können neben der Anbringung von Klemmblöcken 3 auch zum Anbringen weiterer Zubehörteile dienen, beispielsweise von Strommesseinrichtungen oder Leitungshalterungen etc. Weiterhin können an der Vorderseite des Adaptergehäuses 4 Blenden vorgesehen sein, um innerhalb eines Schaltschranks eine geschlossene Oberfläche zu bilden. Bei weiteren möglichen Ausführungsformen der erfindungsgemäßen Adaptervorrichtung 1 können weitere Messeinheiten innerhalb des Adaptergehäuses 4 integriert sein, beispielsweise zur Messung von Spannung, Strom oder Temperatur oder zur Sicherungsüberwachung der Sicherung eines Sicherungs-Lasttrennschalters 2 auf dem Subsystem. Weiterhin können bei der erfindungsgemäßen Adaptervorrichtung 1 bei einer möglichen Ausführungsform Busleitungen zum Datenaustausch von und mit den elektrischen Verbrauchsgeräten vorgesehen sein. Bei einer weiteren möglichen Ausführungsform können mehrere Adaptervorrichtungen 1 miteinander elektrisch und/oder mechanisch verbunden sein.

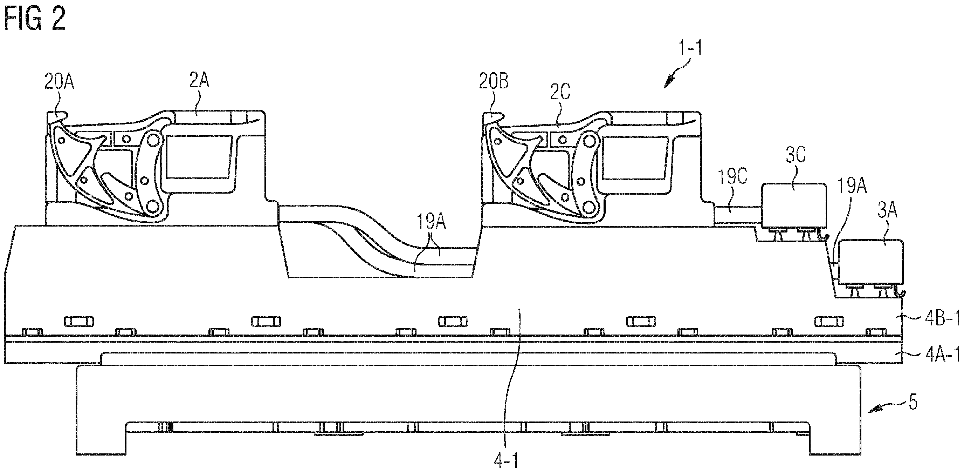

Fig. 2 zeigt eine Seitenansicht auf die in Fig. 1 dargestellte Anordnung von links. Man erkennt die Adaptervorrichtung 1-1, welche auf einem Berührungsschutzsystem 5 aufgesetzt ist, welches die Stromsammelschienen 6-i des Stromsammelschienen-Hauptsystems 7 umschließt. Auf dem Gehäuse 4-1 der Adaptervorrichtung 1-1 sind elektrische Geräte 2A, 2C, nämlich Lasttrennschalter, aufgesetzt, die über Leitungen 19A, 19C mit entsprechenden Anschlussklemmblöcken 3A, 3C verbunden sind. An die Anschlussklemmblöcke 3A, 3C lassen sich elektrische Verbrauchsgeräte anschließen. Die beiden Lasttrennschalter 2A, 2C verfügen jeweils über einen betätigbaren Hebel 20A, 20B zum Ab- oder Hinzuschalten eines elektrischen Verbrauchsgerätes an das Stromsammelschienensystem.

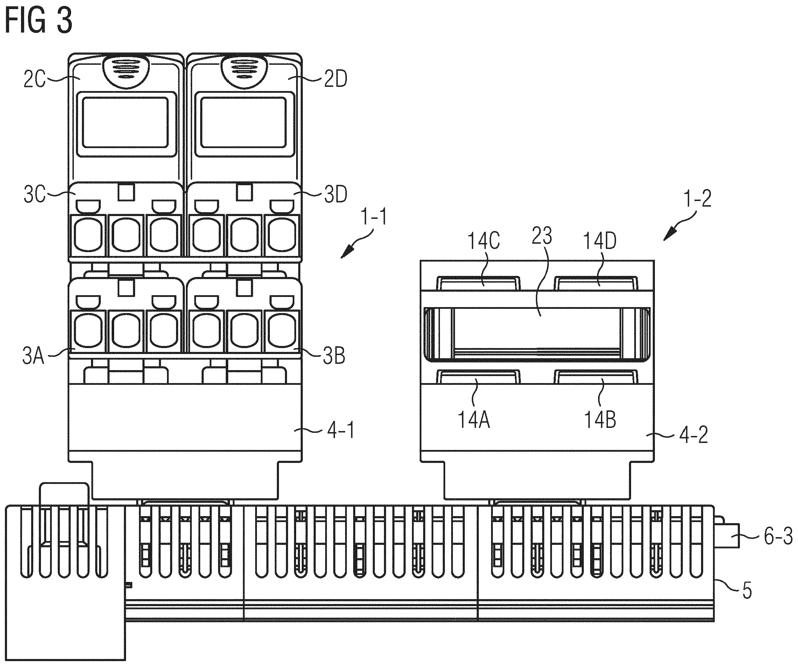

Fig. 3 zeigt eine Ansicht auf die in Fig. 1 dargestellte Anordnung von unten. Man erkennt links die mit Lasttrennschaltern 2C, 2D bestückte erste Adaptervorrichtung 1-1 und rechts die zweite unbestückte Adaptervorrichtung 1-2. Das Berührungsschutzsystem 5 weist bei dem dargestellten Ausführungsbeispiel Schlitze auf. Man erkennt die innerhalb des Berührungsschutzsystems 5 verlaufende untere Stromsammelschiene 6-3 des Stromsammelschienen-Hauptsystems 7.

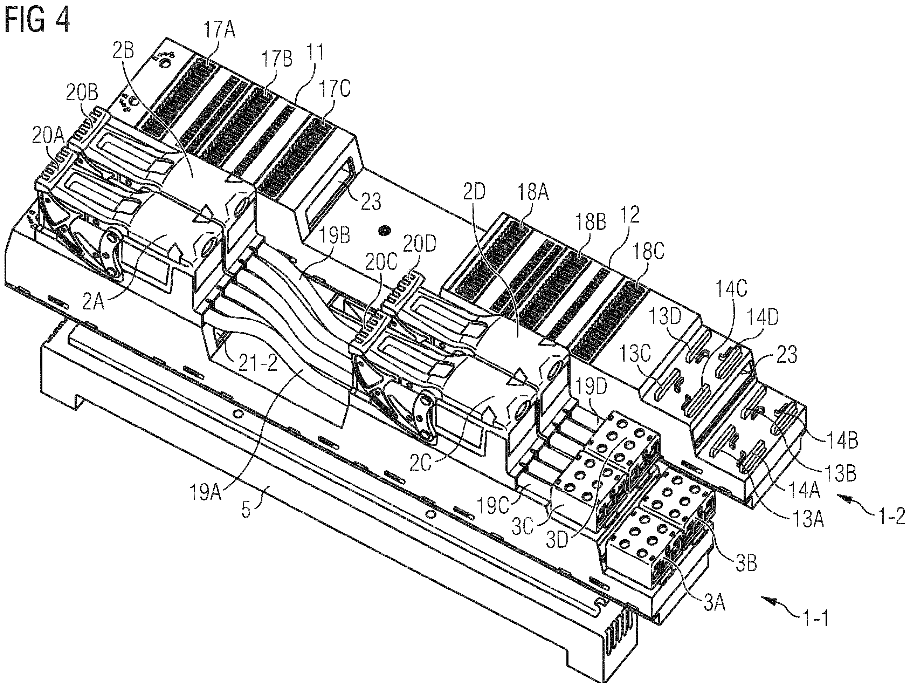

Fig. 4 zeigt eine isometrische Ansicht bzw. perspektivische Ansicht auf die in Fig. 1 dargestellte Anordnung. Man erkennt in Fig. 4, wie Abgangsleitungen 19 von aufgesetzten elektrischen Geräten durch Durchführtunnel 23 hindurch in Richtung entlang der Längsachse des Adaptergehäuses 4 hin zu einer Stirnseite des Adaptergehäuses 4 geführt bzw. verlegt sind.

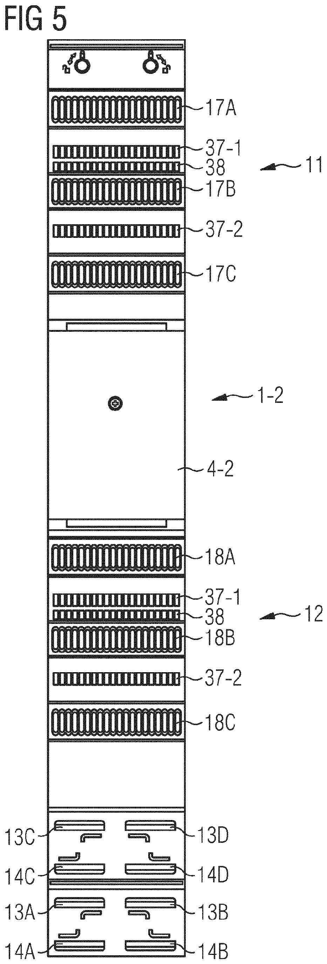

Fig. 5 zeigt eine Vorderansicht auf eine Adaptervorrichtung 1 ohne bestückte elektrische Geräte bzw. Komponenten 2.

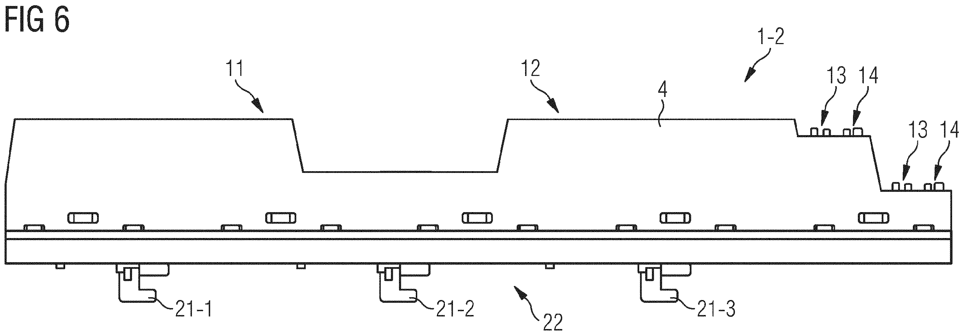

Fig. 6 zeigt eine Seitenansicht auf die in Fig. 5 dargestellte unbestückte Adaptervorrichtung 1. Das Gehäuse 4 weist Vorwölbungen für die beiden Stromsammelschienen-Subsysteme 11, 12 auf, in denen sich die integrierten Stromsammelschienen 15, 16 der Stromsammelschienen-Subsysteme 11, 12 befinden. Man erkennt rechts an der unteren Stirnseite die Trag- bzw. Hutschienen 13, 14 zur Aufnahme von Anschlussklemmblöcken 3 oder sonstigen Zubehörteilen. Die in Fig. 6 dargestellte Adaptervorrichtung 1 ist nicht an das Berührungsschutzsystem 5 montiert, sodass die verschiedenen Klemmbügel 21-1, 21-2, 21-3 zum Aufrasten bzw. Aufschieben auf die Stromsammelschienen 6-1, 6-2, 6-3 des Stromsammelschienen-Hauptsystems 7 erkennbar sind. Das Adaptergehäuse 4 weist an seiner Gehäuserückseite eine Stromsammelschienen-Hauptschnittstelle 22 auf. Diese Stromsammelschienen-Hauptschnittstelle 22 besitzt für jede Stromsammelschiene 6-i bzw. Phase L des Stromsammelschienen-Hauptsystems 7 mindestens ein zugehöriges Kontaktbauelement 21 zur elektromechanischen Kontaktierung der entsprechenden Stromsammelschiene 6-i des Stromsammelschienen-Hauptsystems 7. An dieses Kontaktbauelement 21 können mehrere Stromsammelschienen 15, 16 verschiedener an der Gehäusevorderseite des Adaptergehäuses 4 vorgesehener Stromsammelschienen- Subsysteme 11, 12 über die in dem Adaptergehäuse 4 integrierten Leitungen bzw. Bügel 28 parallel elektrisch angeschlossen werden.

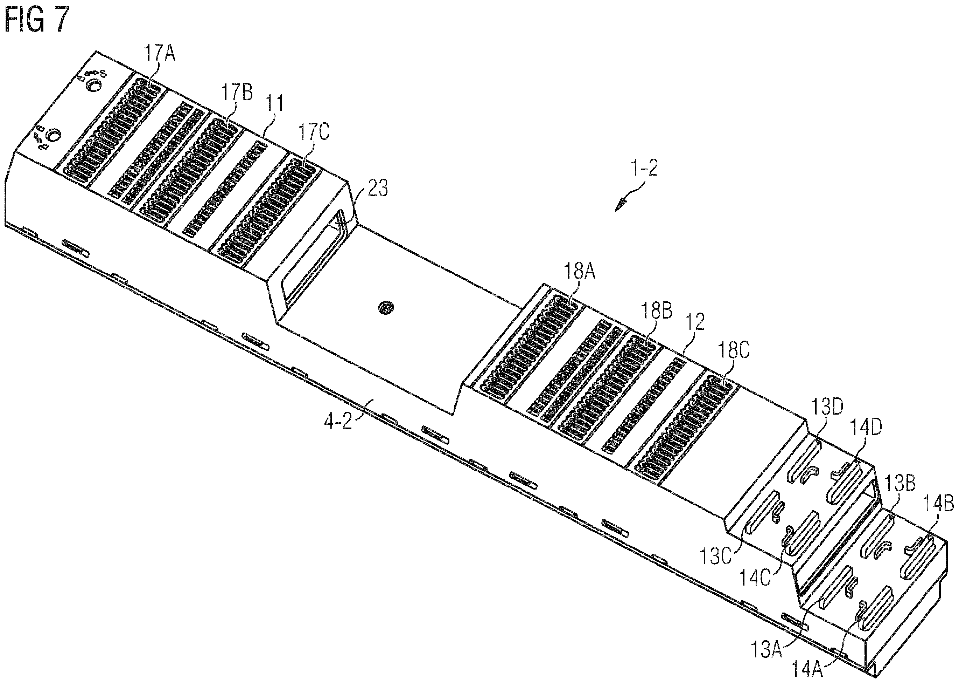

Fig. 7 zeigt eine isometrische bzw. perspektivische Ansicht auf die in Fig. 5, 6 dargestellte Adaptervorrichtung 1-2, welche unbestückt ist.

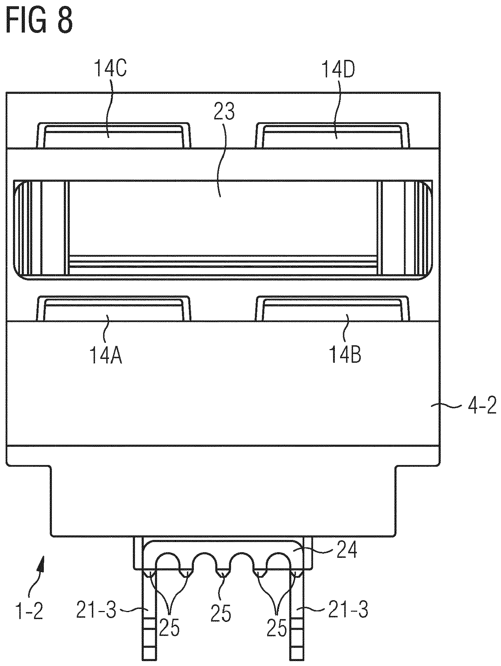

Fig. 8 zeigt eine Ansicht auf die in den Figuren 5 bis 7 dargestellte unbestückte Adaptervorrichtung 1-2 von unten. Auf die Hut- bzw. Tragschienen 14 sind keine Anschlussklemmblöcke 3 oder sonstige Zubehörteile aufgesetzt. Man erkennt den hakenförmigen Klemmbügel 21-3 zum Aufsetzen auf die Stromsammelschiene 6-3 des Stromsammelschienen-Hauptsystems 7. An der Unterseite des Gehäuses 4 kann bei einer möglichen Ausführungsform eine Anschlussklemme mit einer Kontaktplatte 24 vorgesehen sein. Diese verfügt bei einer möglichen Ausführungsform über parallel angeordnete Kontaktlamellen 25. Diese Kontaktlamellen 25 können bei einer möglichen Ausführungsform durch Kontaktierungsschlitze eines Berührungsschutzmoduls des Berührungsschutzsystems 5 hindurch eine darunterliegende Stromsammelschiene 6 des Stromsammelschienen-Hauptsystems 7 elektrisch kontaktieren.

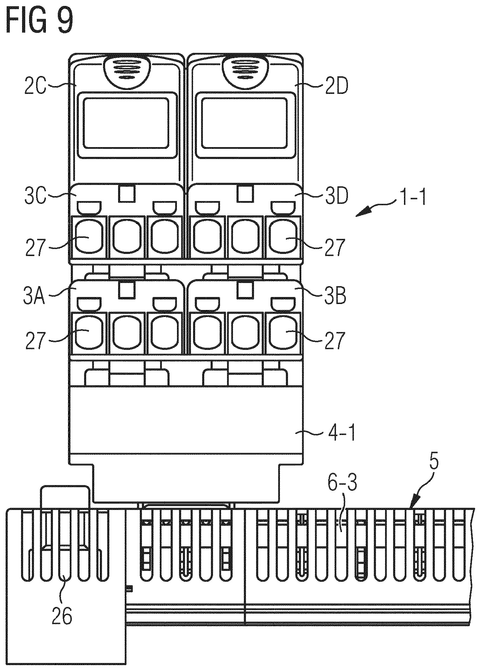

Fig. 9 zeigt eine Ansicht von unten auf eine mit Sicherungs-Lasttrennschaltern und Anschlussklemmblöcken 3 bestückte Adaptervorrichtung 1-1. Man erkennt die vier Anschlussklemmblöcke 3A bis 3D für die vier Komponenten bzw. Bauteile 2A bis 2D, wobei jeder Anschlussklemmblock 3 Anschlussklemmen 27 zum Anschluss eines zugehörigen elektrischen Verbrauchgeräts besitzt (L1, L2, L3), wie in Fig. 9 dargestellt. Wie man aus Fig. 9 erkennen kann, ist der Schienenträger 26 des Hauptsystems 7 aufgrund der Form des Adaptergehäuses 4-1 überbaubar.

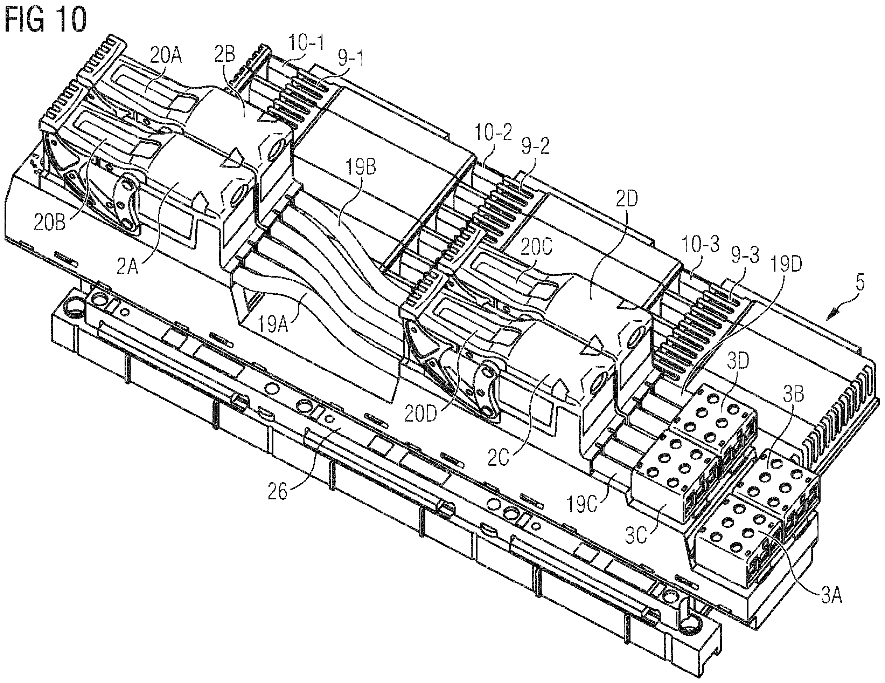

Fig. 10 zeigt eine isometrische Ansicht der in Fig. 9 dargestellten Anordnung.

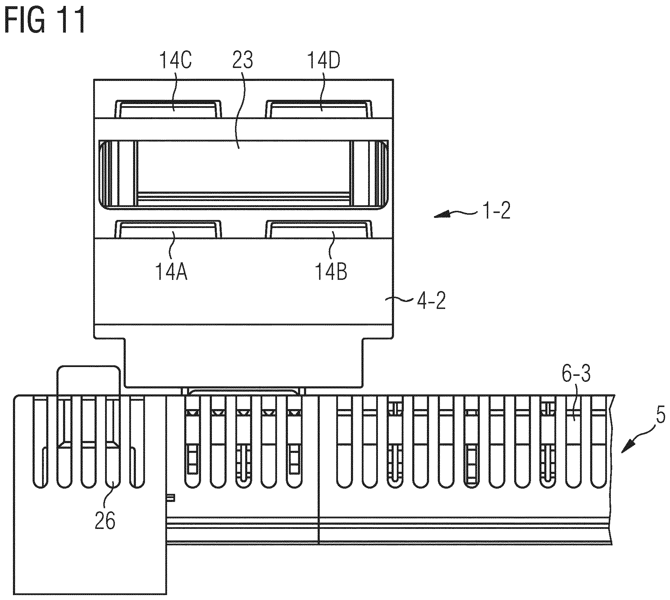

Fig. 11 zeigt eine Ansicht von unten auf eine Adaptervorrichtung 1 ohne Komponenten bzw. Bauteile 2, d.h. unbestückt, auf einem berührungsgeschützten System 5, wobei der Schienenträger 26 überbaut ist.

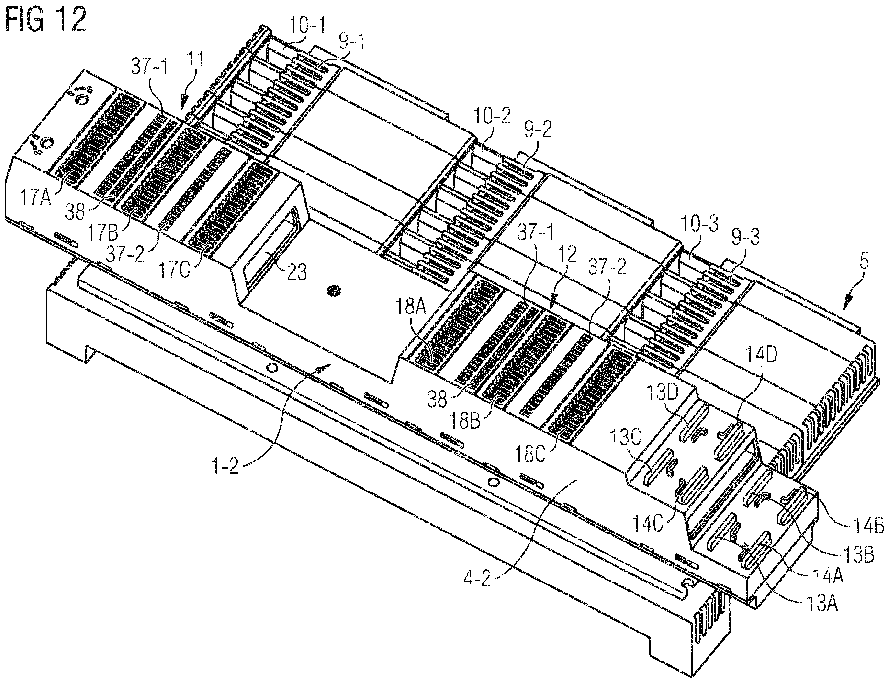

Fig. 12 zeigt eine isometrische bzw. perspektivische Ansicht auf die in Fig. 11 dargestellte unbestückte Adaptervorrichtung 1-2.

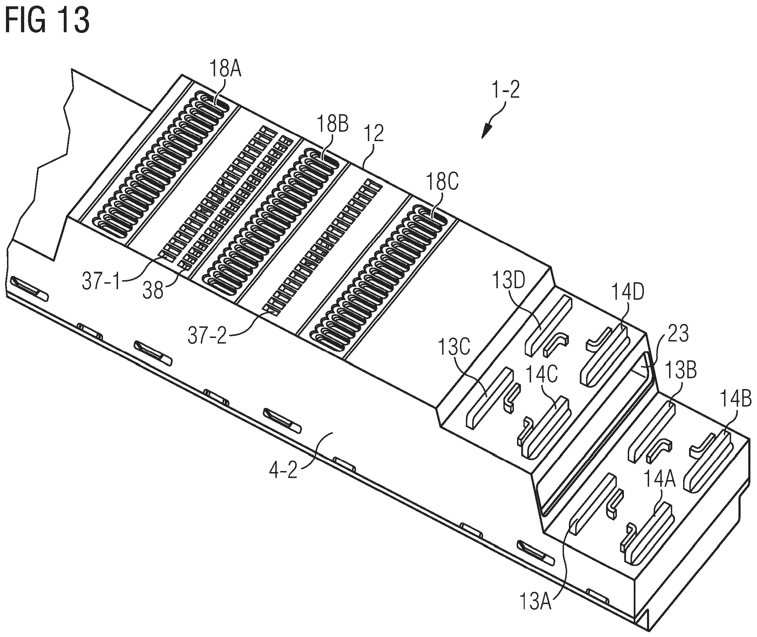

Fig. 13 zeigt eine isometrische Detailansicht auf die untere Hälfte für die in Fig. 12 dargestellte unbestückte Adaptervorrichtung 1-2 mit den Hut- bzw. Tragschienen 13, 14 zum Anschluss von Anschlussklemmblöcken 3 oder sonstigen Zubehörteilen, insbesondere Strommesseinrichtungen. Ferner ist ein Durchführtunnel 23 für die Abgangsleitungen 19 vorgesehen, welcher unterhalb der Stromsammelschienen-Subschnittstelle des Stromsammelschienen-Subsystems 12 verläuft, in Fig. 13 dargestellt.

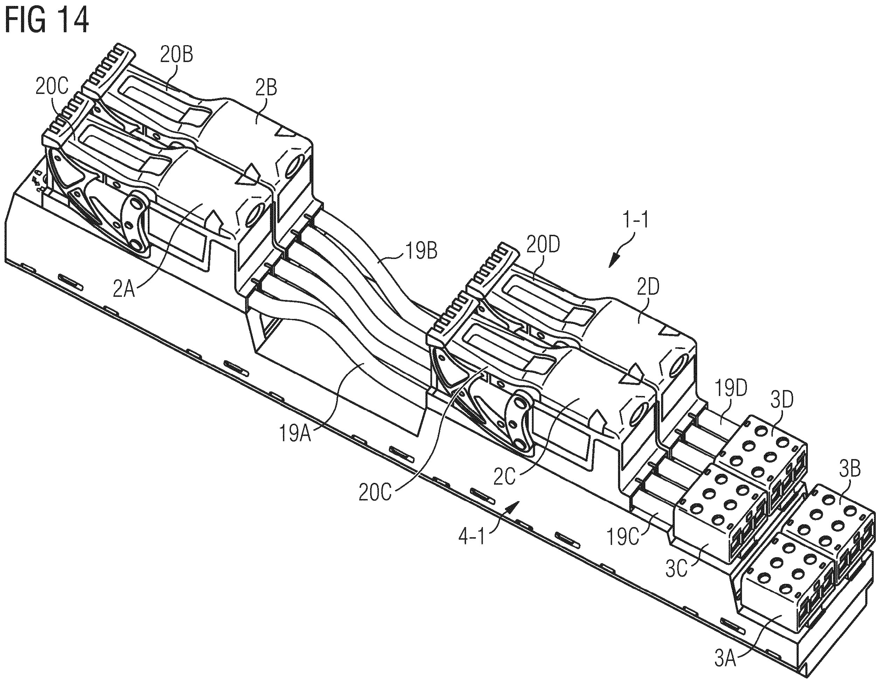

Fig. 14 zeigt eine isometrische bzw. perspektivische Ansicht einer bestückten Adaptervorrichtung 1-1 mit vier NH00-Lasttrennschaltern 2A bis 2D und zugehörigen vier Anschlussklemmblöcken 3A bis 3D mit den dazwischen verlegten Abgangsleitungen, nämlich vier mal drei (d.h. zwölf) Abgangsleitungen 19.

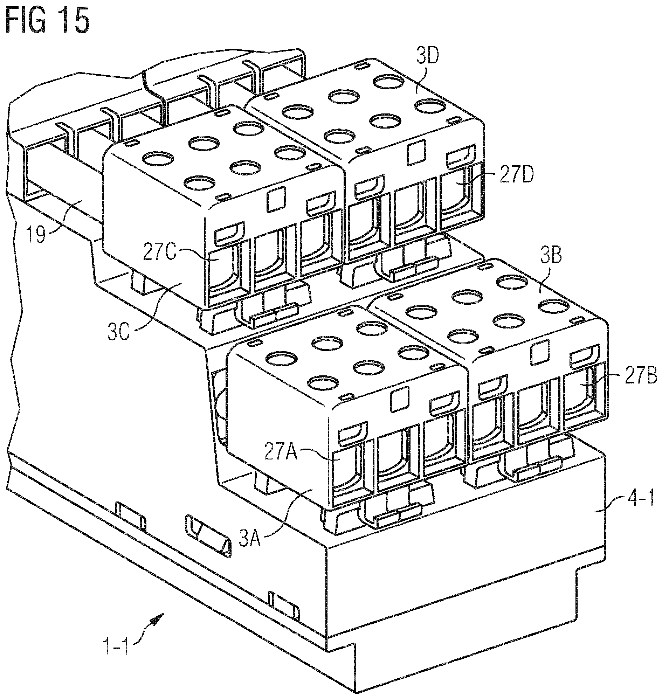

Fig. 15 zeigt eine isometrische bzw. perspektivische Ansicht eines unteren Teils der bestückten Adaptervorrichtung 1-1 mit vier Anschlussklemmblöcken 3A bis 3D und zugehörige vier Lasttrennschalter 2A bis 2D. Jeder der drei Anschlussklemmblöcken 3A bis 3D weist drei Anschlussklemmen 27 für unterschiedliche Stromphasen L1, L2, L3 auf. Die Anschlussklemmen 27 dienen zum Anschluss von elektrischen Verbrauchsgeräten.

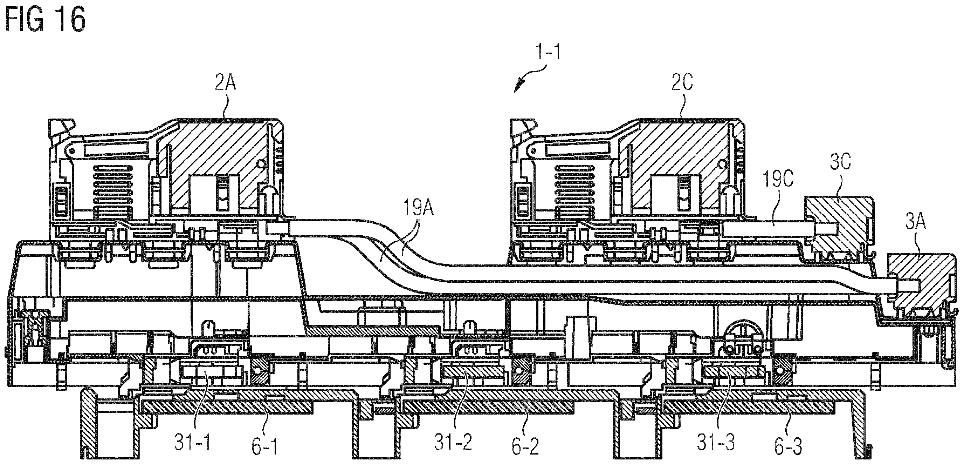

Fig. 16 zeigt eine Schnittansicht einer mit elektrischen Geräten 2 bestückten Adaptervorrichtung 1-1, die auf ein berührungsgeschütztes 185 mm-Stromsammelschienensystem aufgesetzt ist, das drei parallel angeordnete Stromsammelschienen 6-1, 6-2, 6-3 umfasst. Man erkennt drei integrierte Stromwandler 31 an den Zugangskontakten 29.

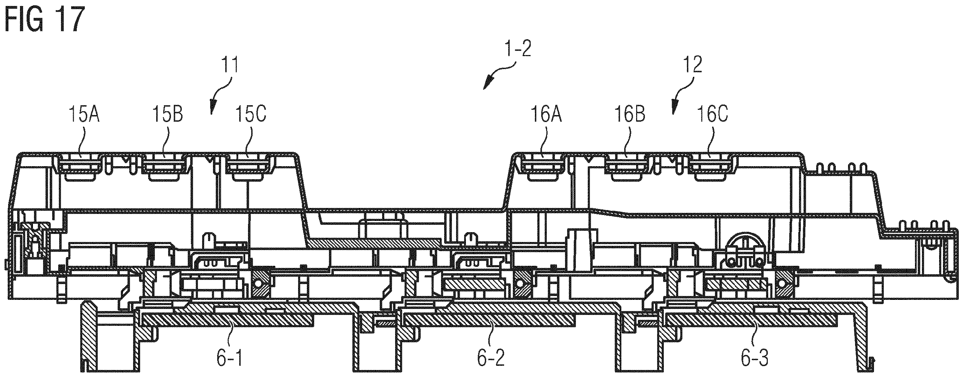

Fig. 17 zeigt eine Schnittansicht einer unbestückten Adaptervorrichtung 1-2 mit den beiden Stromsammelschienen-Subsystemen 11, 12, die jeweils drei parallel verlaufende Schlitz-Stromsammelschienen 15A, 15B, 15C sowie 16A, 16B, 16C beinhalten. Diese sind intern an die Stromsammelschienen 6-i des Stromsammelschienen-Hauptsystems 7 elektrisch angeschlossen.

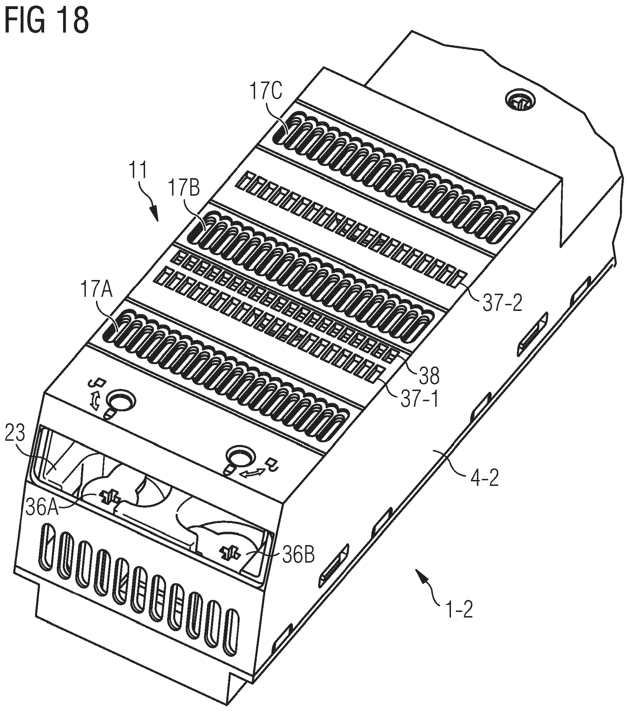

Fig. 18 zeigt eine isometrische bzw. perspektivische Ansicht auf eine unbestückte Adaptervorrichtung 1-2, wobei Details von Verriegelungen zwischen der oberen und unteren Adaptergehäusehälfte des Adaptergehäuses 4-2 erkennbar sind. Man erkennt zwei Verriegelungselemente 36A, 36B, welche das Adaptervorderteil mit dem Adapterhinterteil mechanisch verriegeln. Man erkennt ferner Schlitze 37 zur Aufnahme mechanischer Verrieglungselemente, welche für die Montage von Geräten 2 auf die Subschnittstelle vorgesehen sind. Ferner können Öffnungen 38 zur Aufnahme von Kodiervorsprüngen der Geräte 2 vorgesehen sein, um einen falsch gepolten Anschluss der Geräte 2 zu verhindern.

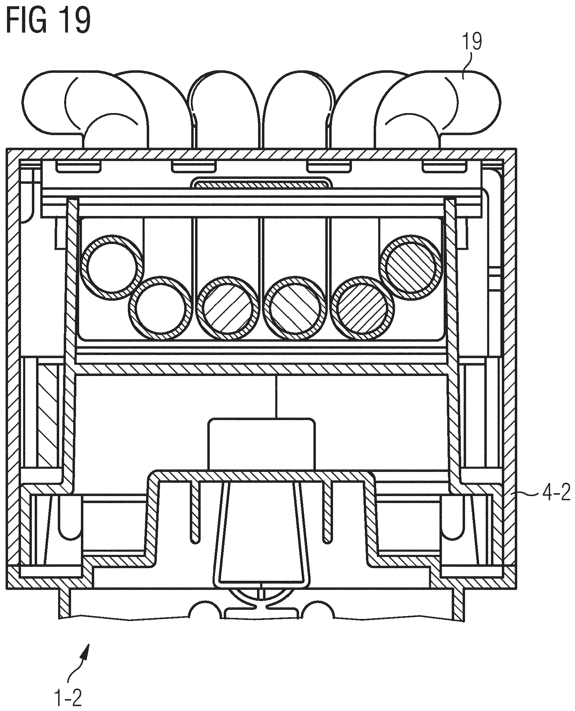

Fig. 19 zeigt eine Schnittansicht durch einen Durchführ- bzw. Leitungstunnel mit Abgangsleitungen 19, welcher unterhalb eines Stromsammelschienen-Subsystems 11, 12 verläuft.

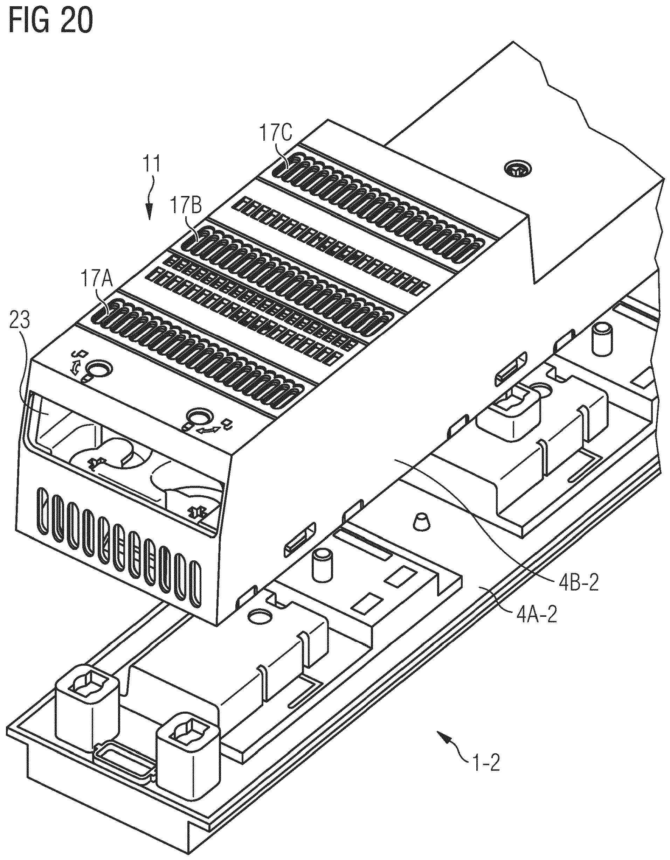

Fig. 20 zeigt eine isometrische bzw. perspektivische Ansicht auf eine unbestückte Adaptervorrichtung 1-2, bei dem ein Gehäuseoberteil 4B-2 von einem Gehäuseunterteil 4A-2 des Adaptergehäuses 4-2 getrennt dargestellt ist. Das Adaptergehäuse 4-2 der unbestückten Adaptervorrichtung 1-2 umfasst zwei voneinander trennbare Adaptergehäusehälften 4A-2, 4B-2. Die beiden Adaptergehäusehälften 4A-2, 4B-2 umfassen eine erste Adaptergehäusehälfte 4A-2 an der Gehäuserückseite des Adaptergehäuses 4-2 und eine zweite Adaptergehäusehälfte 4B-2 an der Gehäusevorderseite des Adaptergehäuses 4-2. Die erste Adaptergehäusehälfte 4A-2 an der Gehäuserückseite des Adaptergehäuses 4-2 weist die Stromsammelschienen-Hauptschnittstelle 22 zur elektromechanischen Kontaktierung von Stromsammelschienen 6-i des Stromsammelschienen-Hauptsystems 7 auf. Die Adaptergehäusehälfte 4A-2 ist ebenfalls derart ausgestaltet, dass es berührungsgeschützt ausgeführt ist und das Adapteroberteil 4B-2 unter Spannung montiert und demontiert werden kann.

Die zweite Adaptergehäusehälfte 4B-2 an der Gehäusevorderseite des Adaptergehäuses 4-2 umfasst die Stromsammelschienen-Subschnittstellen 11, 12 mit den innerhalb des Adaptergehäuses 4-2 integrierten Stromsammelschienen 15, 16 der Stromsammelschienen-Subsysteme 11, 12. Man erkennt in Fig. 20 die Stromsammelschienen-Subschnittstelle des Stromsammelschienen-Subsystems 11 mit drei Schlitz-Stromsammelschienen 15A, 15B, 15C, welche Kontaktaufnahmeschlitze enthalten, die unterhalb der in Fig. 20 dargestellten Reihen von Durchführschlitzen 17A, 17B, 17C angeordnet sind. Die Wandung der Gehäusevorderseite des Adaptergehäuses 4 weist im Bereich der Stromsammelschienen-Subschnittstelle Durchführschlitze 17A, 17B, 17C zum Hindurchführen elektrischer Kontakte eines anzuschließenden elektrischen Gerätes 2 auf, die in die darunterliegenden Kontaktschlitze einer in dem Adaptergehäuse 4 integrierten Stromsammelschiene zur elektrischen Kontaktierung der Stromsammelschienen 6 des Stromsammelschienen-Hauptsystems 7 einführbar bzw. einsteckbar sind. Die erste untere Gehäusehälfte 4A-2 des Adaptergehäuses 4-2 mit der Stromsammelschienen-Hauptschnittstelle 22 ist vorzugsweise zur elektromechanischen Kontaktierung der Stromsammelschienen 6 des Stromsammelschienen-Hauptsystems 7 auf den Stromsammelschienen 6 des Stromsammelschienen-Hauptsystems 7 fest montierbar. Die zweite an der Gehäusevorderseite des Adaptergehäuses 4 vorgesehene Adaptergehäusehälfte 4B-2, die die verschiedenen Stromsammelschienen-Subschnittstellen aufweist, ist von der fest montierten unteren Adaptergehäusehälfte 4A-2 mechanisch lösbar und kann beispielsweise nach Rotation um 180° entlang einer Rotations- bzw. Querachse des Adaptergehäuses 4-2 wieder mit der ersten Adaptergehäusehälfte 4A-2 mechanisch verbunden werden. Somit ist es möglich, einen Abgang der Abgangsleitungen 19 nach unten oder nach oben herbeizuführen. Die obere bzw. vordere Adaptergehäusehälfte 4B-2 kann bei einer möglichen Ausführungsform auf die untere fest montierte Adaptergehäusehälfte 4A-2 aufgesetzt bzw. aufgesteckt werden. Nach dem Ausstecken erfolgt eine Verriegelung beispielsweise über mehrere Drehriegel. Die vordere Adaptergehäusehälfte 4B-2 kann wieder entriegelt werden und beispielsweise um 180° gedreht wieder auf die untere fest montierte Adaptergehäusehälfte 4A-2 montiert werden. Bei einer alternativen Ausführungsform ist das Adaptergehäuse 4 der Adaptervorrichtung 1 einteilig ausgebildet und kann komplett um 180° entlang der Querachse bzw. Hochachse gedreht werden, um einen Leitungsabgang in beide Richtungen zu ermöglichen.

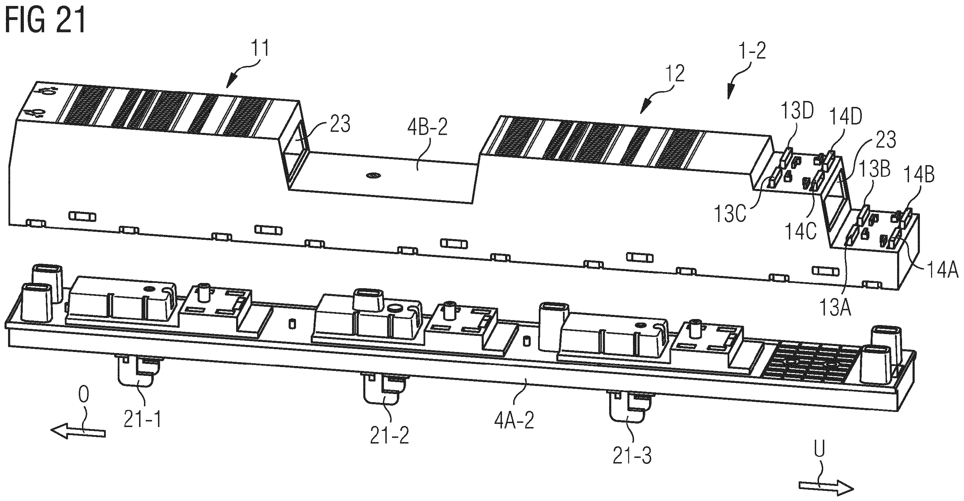

Fig. 21 zeigt eine isometrische Ansicht auf eine unbestückte Adaptervorrichtung 1, wobei die beiden Adaptergehäusehälften 4A-1, 4B-1 voneinander getrennt sind.

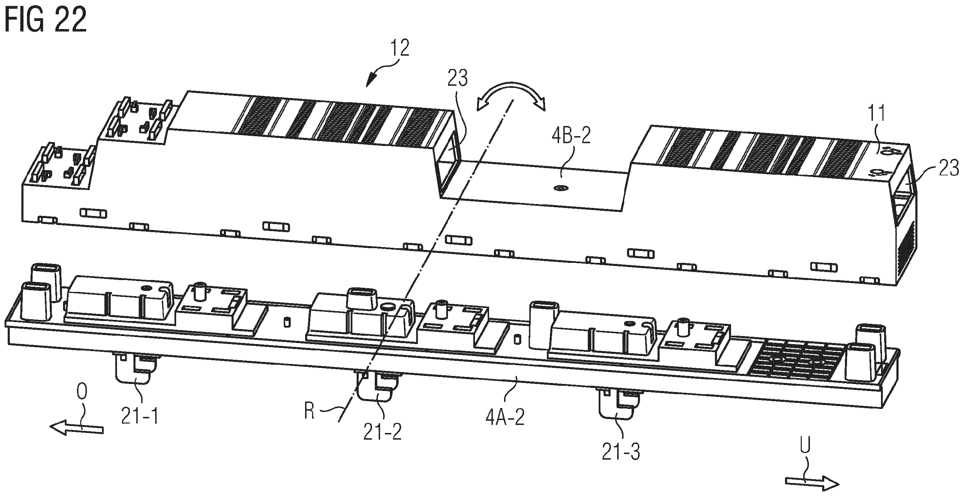

Fig. 22 zeigt eine zu Fig. 21 ähnliche Ansicht, wobei das Adaptergehäuseoberteil 4B-2 um 180° gedreht ist, sodass ein Leitungsabgang nach oben erfolgt.

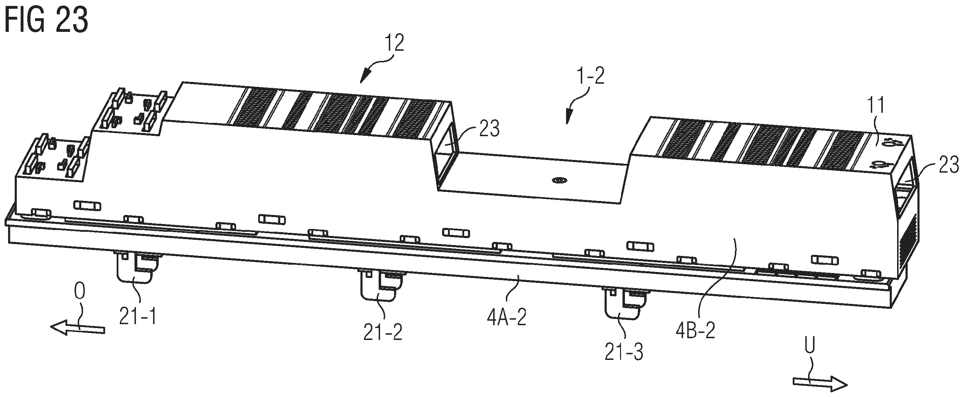

Fig. 23 zeigt eine isometrische Ansicht einer unbestückten Adaptervorrichtung 1-2, bei der das obere Gehäuseteil 4B-2 um 180° gedreht ist, sodass ein Leitungsabgang nach oben realisiert werden kann.

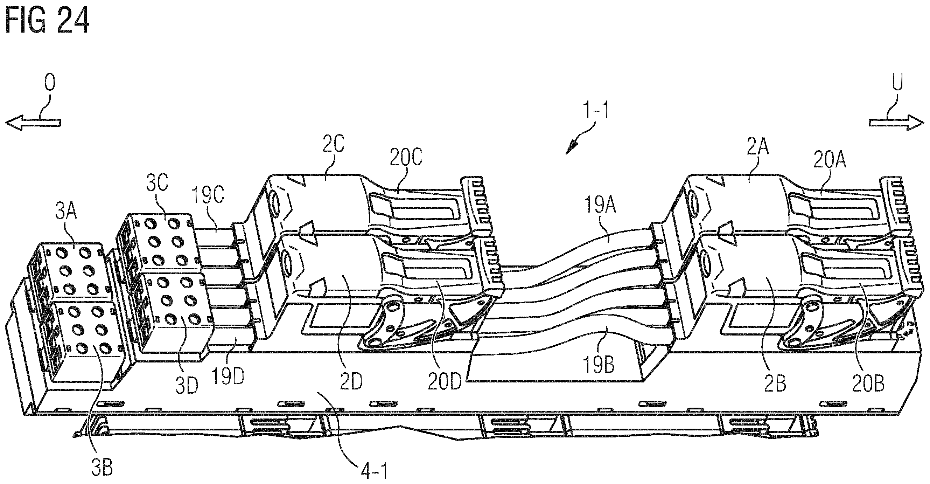

Fig. 24 zeigt eine isometrische bzw. perspektivische Ansicht einer bestückten Adaptervorrichtung 1-1 mit vier NH00-Lasttrennern 2A-2D, bei denen das obere Gehäuseteil 4B-1 um 180° gedreht ist und somit der Leitungsabgang für die stromverbrauchenden Einheiten nach oben realisiert werden kann.

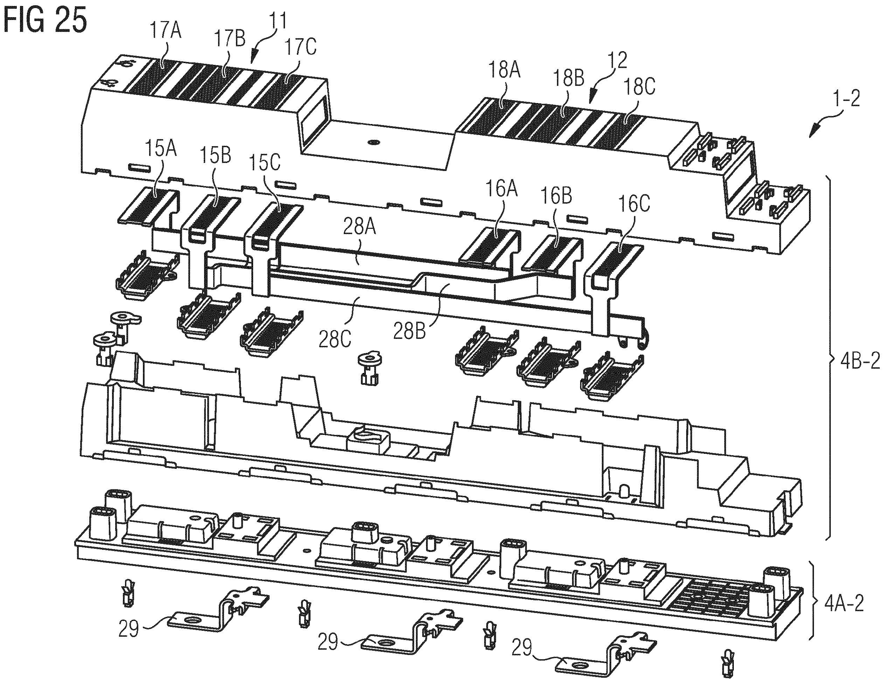

Fig. 25 zeigt eine isometrische Explosionsdarstellung einer unbestückten Adaptervorrichtung 1-2 mit zwei voneinander trennbaren Gehäusehälften 4A-2, 4B-2 mit den innerhalb des Adaptergehäuses 4-2 enthaltenen bzw. integrierten Komponenten. Die obere Gehäusehälfte 4B-2 umfasst zwei Stromsammelschienen-Subsysteme 11, 12 mit entsprechenden Schnittstellen. Wie man in Fig. 25 erkennen kann, enthält jedes der beiden Stromsammelschienen-Subsysteme 11, 12 drei innerhalb des Adaptergehäuses 4-2 integrierte Schlitz-Stromsammelschienen 15A, 15B, 15C bzw. 16A, 16B, 16C. Bei den Stromsammelschienen 15, 16 handelt es sich um Schlitz-Stromsammelschienen, die durch ein kontaktaufnehmendes Schienenprofil gebildet werden, welches gleichmäßig beabstandete Kontaktschlitze zur Aufnahme von elektrischen hervorstehenden Kontakten eines anzuschließenden elektrischen Gerätes 2 aufweist. An der Gehäusevorderseite des oberen Adaptergehäuses 4B-2 sind in dem Bereich der Stromsammelschienen-Subschnittstelle 11, 12 jeweils gleichmäßig beabstandete Durchführschlitze 17A, 17B, 17C bzw. 18A, 18B, 18C vorgesehen, die unmittelbar über den Kontaktaufnahmeschlitzen der geschlitzten Stromsammelschienen 15, 16 liegen. Ein hervorstehender elektrischer Kontakt eines elektrischen Gerätes 2, beispielsweise eines Lasttrennschalters, wird durch einen Durchführschlitz 17, 18 hindurchgeführt und in einen unmittelbar darunterliegenden Aufnahmeschlitz der Schlitz-Stromsammelschienen 15, 16 eingesteckt. Die Schlitz-Stromsammelschienen 15, 16 sind durch interne elektrische Leitungen bzw. Schienen mit Kontaktbauelementen an der Unterseite des Adaptergehäuses 4 verbunden, um die Stromsammelschienen 6-i des Stromsammelschienen-Hauptsystems 7 zu kontaktieren. Man erkennt in Fig. 25 die Kontaktbauelemente zum Aufsetzen der unteren Gehäuseseite des Adaptergehäuses 4 auf die Stromsammelschienen 6. Bei dem in Fig. 25 dargestellten Ausführungsbeispiel ist die untere Adaptergehäusehälfte 4A zur Montage zweiteilig ausgebildet. Man erkennt ferner in Fig. 25 drei stromführende in dem Adaptergehäuse 4 integrierte Schienen 28A, 28B, 28C, die jeweils zwei Stromsammelschienen der beiden parallel angeschlossenen Stromsammelschienen-Subsysteme 11, 12 verbinden. Alternativ ist eine Verbindung mittels elektrischer Rund- oder Flachleiter möglich. Beispielsweise ist die erste Schlitz-Stromsammelschiene 15A des ersten Stromsammelschienen-Subsystems 11 mit der entsprechenden Schlitz-Stromsammelschiene 16A des Stromsammelschienen-Subsystems 12 elektrisch verbunden. Jede der drei stromführenden Schienen 28A, 28B, 28C ist mit einem entsprechenden elektrischen Kontaktbauelement 29 an der Unterseite des Adaptergehäuses 4 zur Kontaktierung der Stromsammelschienen 6 des Stromsammelschienen-Hauptsystems 7 verbunden.

Fig. 26 zeigt eine isometrische Explosionsdarstellung von rechts unten der vollständigen Adaptervorrichtung 1-2.

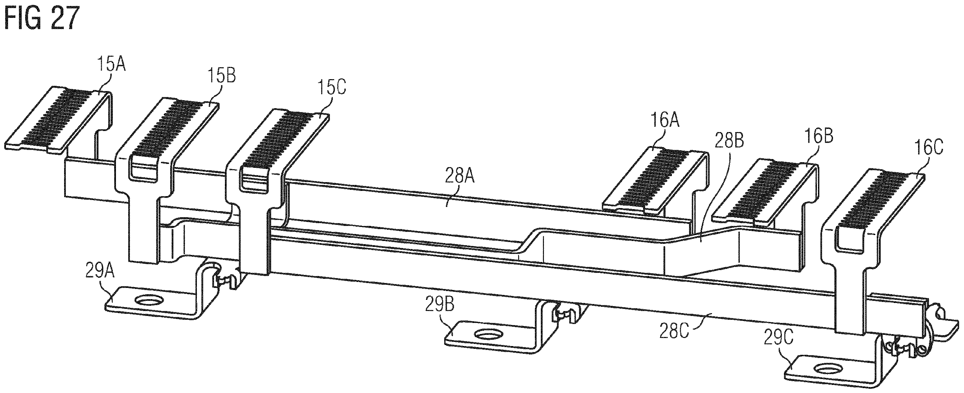

Fig. 27 zeigt perspektivisch eine Ansicht des in dem Adaptergehäuse 4 integrierten Kontaktsystems zur Verbindung der Stromsammelschienen-Subsysteme 11, 12 mit dem Stromsammelschienen-Hauptsystem 7.

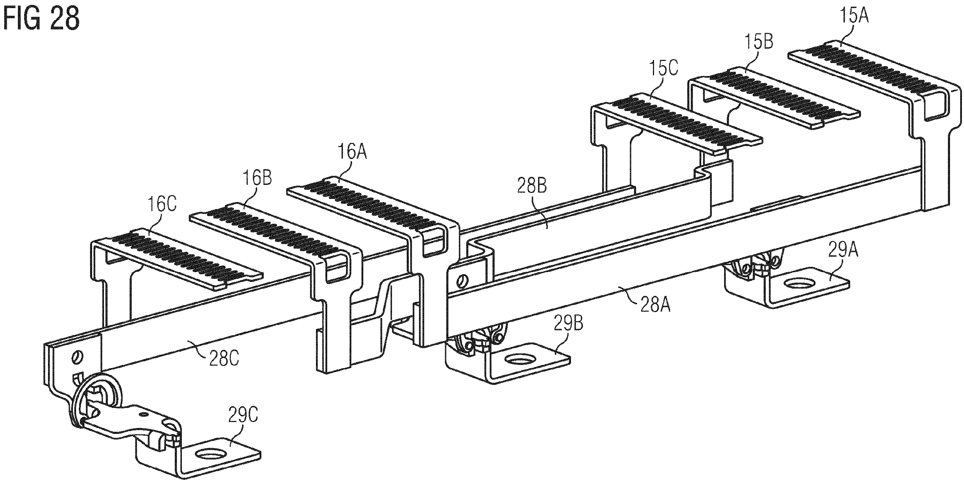

Fig. 28 zeigt eine isometrische Darstellung des in Fig. 27 dargestellten Kontaktsystems von der anderen Seite.

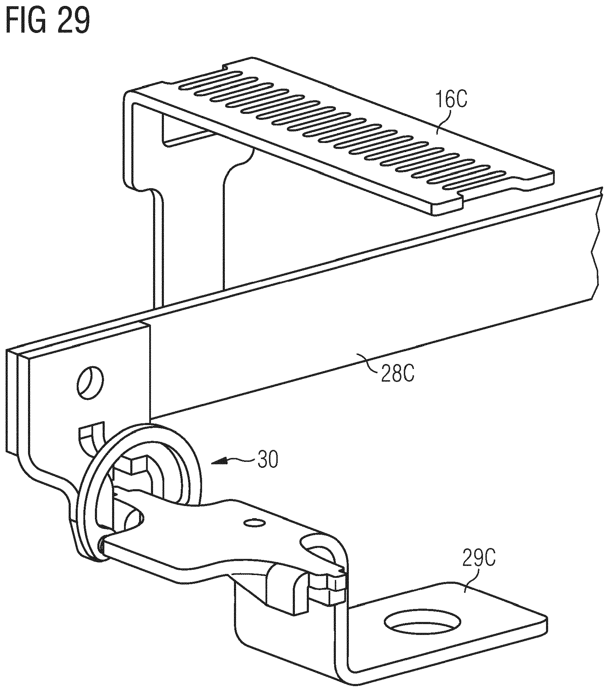

Fig. 29 zeigt eine Detaildarstellung eines Steckkontaktes 30, welcher eine lösbare Verbindung zwischen einem Adapterunterteil und einem Adapteroberteil der Adaptervorrichtung 1 realisiert.

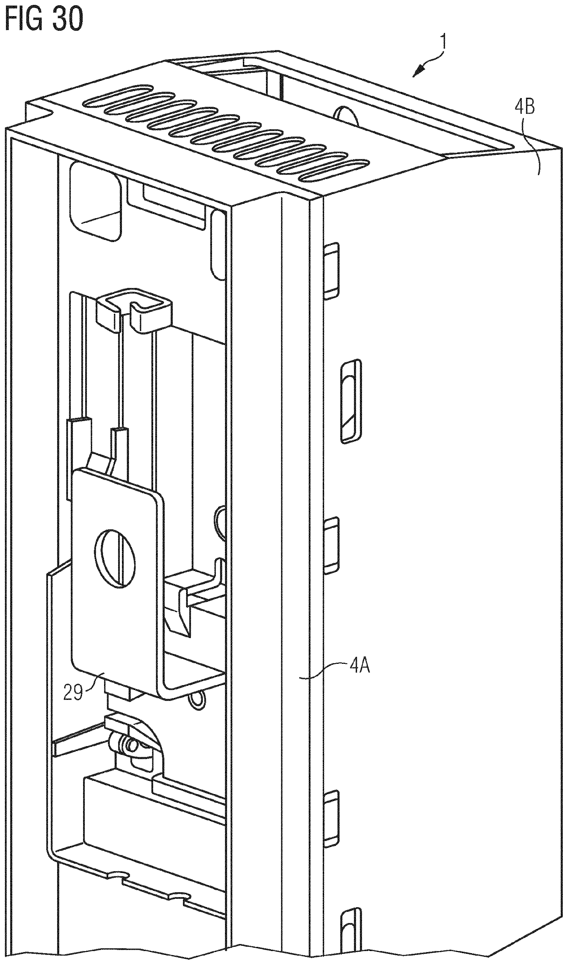

Fig. 30 zeigt eine isometrische Darstellung von links oben auf einen Zugangskontaktbereich 29 ohne Klemmbügel 21.

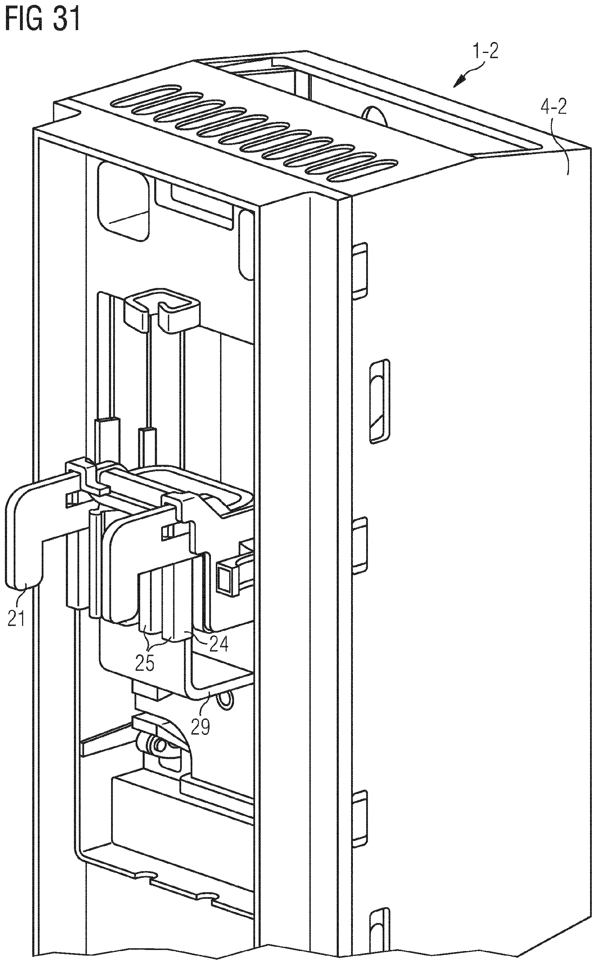

Fig. 31 zeigt eine Darstellung gemäß Fig. 30, allerdings mit einem Klemmbügel 21 mit zwei hakenförmigen Bereichen zum Hintergreifen einer Stromsammelschiene 6 des Stromsammelschienen-Hauptsystems 7 und zur Kontaktierung einer Stromsammelschiene 6 des berührungsgeschützten Stromsammelschienen-Hauptsystems 7.

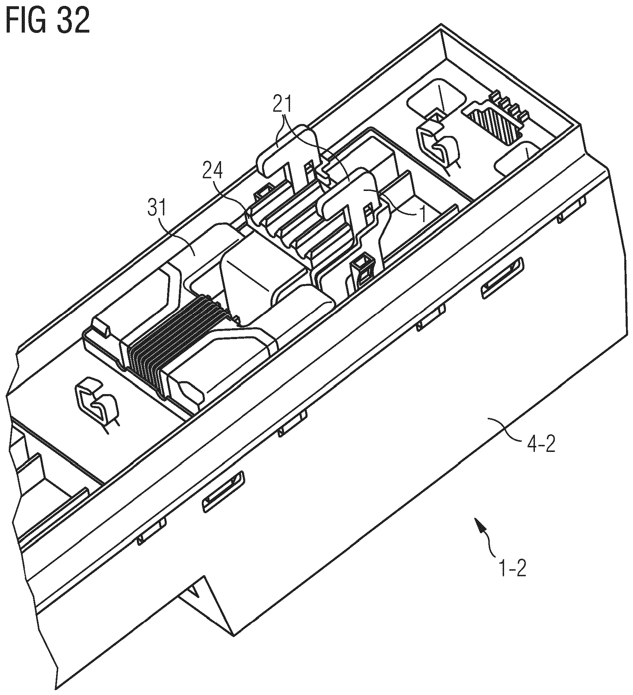

Fig. 32 zeigt eine isometrische Detailansicht eines Zugangskontaktbereichs mit einer dort installierten Strommesseinrichtung bzw. Stromwandler 31.

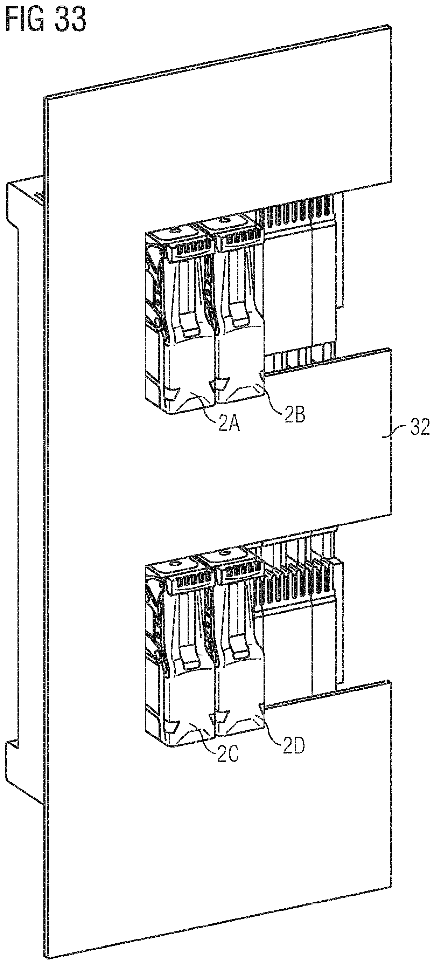

Fig. 33 zeigt eine isometrische Ansicht einer möglichen Installation einer bestückten Adaptervorrichtung 1-1 mit vier darauf aufgesetzten elektronischen bzw. elektrischen Geräten 2A-2D innerhalb eines Schaltschrankes mit angedeuteter Schaltschrankblende 32.

Fig. 34 zeigt eine isometrische Ansicht einer Adaptervorrichtung 1 mit verschiedenen darauf montierten Komponenten bzw. Bauteilen 2E, 2F. Bei dem dargestellten Beispiel handelt es sich bei den beiden Geräten bzw. Komponenten 2E, 2F (eine pro Subsystem) um einen Adapter für Leistungsschalter. Die Leistungsschalter sind wie in Fig. 34 dargestellt auf die Adaptervorrichtung 1 aufgesetzt bzw. dort installiert.

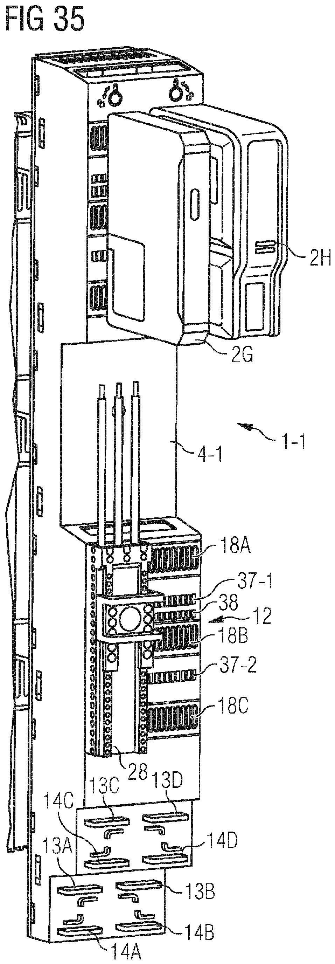

Fig. 35 zeigt eine isometrische Ansicht einer Adaptervorrichtung 1 mit weiteren Komponenten bzw. Geräten 2H, 2J. In dem dargestellten Beispiel sind auf dem oberen Stromsammelschienen-Subsystem 11 ein Netzteil und ein elektronischer Motorstarter installiert. Auf dem unteren Stromsammelschienen-Subsystem 12 befindet sich in dem dargestellten Beispiel ein Adapter 2J für einen Motorstarter.

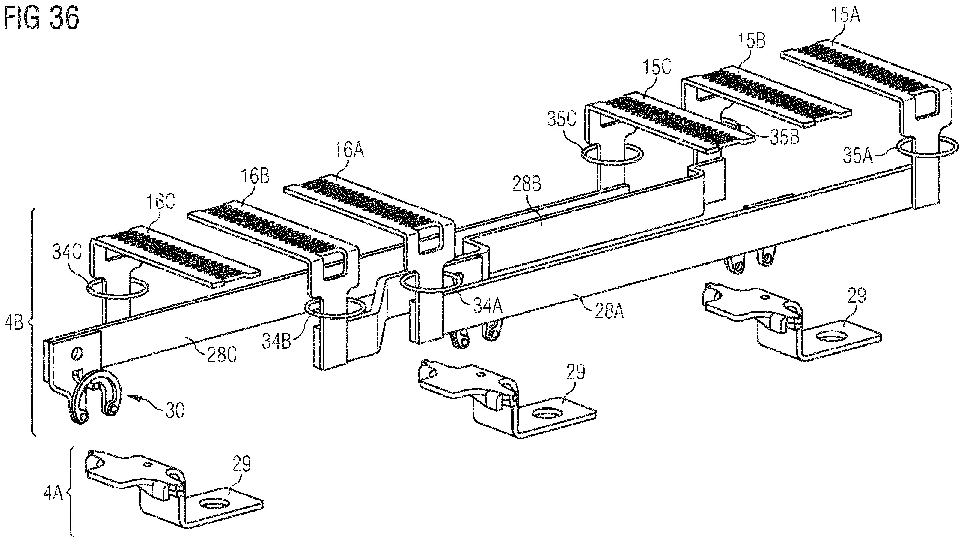

Fig. 36 zeigt eine isometrische Ansicht von rechts unten auf ein Kontaktsystem. Die Darstellung zeigt eine mögliche Trennung zwischen einem oberen und unteren Adapterteil bzw. Adaptergehäusehälfte zur Verdeutlichung der Funktionsweise der Steckkontakte. Fig. 36 zeigt ferner drei Strommesseinheiten 34A, 34B, 34C zur Strommessung des durch die Stromsammelschienen 16A, 16B, 16C fließenden Stromes sowie drei Strommesseinheiten 35A, 35B, 35C des durch die Stromsammelschienen 15A, 15B, 15C fließenden Stromes (zugangsseitige Strommessung).

Die erfindungsgemäße Adaptervorrichtung 1 ist nicht auf die in den Figuren 1 bis 36 dargestellten Ausführungsbeispiele beschränkt. Beispielsweise kann die Adaptervorrichtung 1 mehr als zwei Stromsammelschienen-Subsysteme umfassen. Weiterhin können die Stromsammelschienen-Subsysteme auch andersartige Stromsammelschienen beinhalten, beispielsweise massive Stromsammelschienen ohne Kontaktschlitze, wie in Fig. 37 dargestellt. Auch das Profil der Stromsammelschienen der Stromsammelschienen-Subsysteme kann unterschiedlich sein, beispielsweise um höhere Nennstromstärken zu erreichen.

Fig. 38 zeigt ein weiteres Ausführungsbeispiel mit Stromsammelschienen 15, 16, welche als Hybrid-Stromsammelschienen ausgebildet sind, wobei das stromführende Schienenprofil für eine höhere Nennstromstärke als bei der in Fig. 36 dargestellten Ausführungsform ausgebildet ist. Die Hybrid-Stromsammelschienen 15, 16 in Fig. 38 sind im Querschnitt so ausgebildet, dass sie in eine rechteckige Hüllkurve passen und so herkömmliche massive Stromsammelschienen mit rechteckigem Querschnitt einfach ersetzen können. Sie weisen einen kontaktaufnehmenden Abschnitt mit Kontaktschlitzen und einen stromführenden Abschnitt mit massivem Querschnitt auf, wie in Fig. 38 erkennbar. Andere Formen sind möglich, zum Beispiel ein T-förmiger stromführender Abschnitt. Neben den in der Explosionsdarstellung dargestellten elektrischen Verbindungsschienen bzw. elektrischen Leitungen können zusätzlich Busleitungen zur Kommunikation der verschiedenen Geräte untereinander vorgesehen sein. Die Anzahl der parallel angeordneten Stromsammelschienen der verschiedenen Stromsammelschienen-Subsysteme 11, 12 und/oder des Stromsammelschienen-Hauptsystems 7 kann je nach Anwendungsfall variieren, beispielsweise können mehr als drei Stromsammelschienen pro Stromsammelschienensystem vorgesehen sein, insbesondere Null- oder Schutzleiter. Die Form und Anzahl der Kontaktbauelemente kann ebenfalls je nach Anwendungsfall variieren.

Die erfindungsgemäße Adaptervorrichtung 1 erlaubt es flexibel, unterschiedliche Stromsammelschienensysteme miteinander zu kombinieren. Dabei ist die Adaptervorrichtung 1 derart ausgestaltet, dass eine möglichst hohe Anzahl von elektrischen Geräten 2 sowie elektrischen Verbrauchsgeräten platzsparend innerhalb eines Schaltschrankes montiert werden können. Die Sammelschienenträger sind dabei vollständig überbaubar. Mithilfe der erfindungsgemäßen Adaptervorrichtung 1 können unterschiedliche Stromsammelschienen-Subsysteme, beispielsweise ein Crossboard, oder klassische Stromsammelschienensysteme auf ein übergeordnetes Stromsammelschienen-Hauptsystem 7 adaptiert werden. Zubehörteile, insbesondere Messeinrichtungen, können auf Tragschienen 13, 14 der Adaptervorrichtung 1 aufgesetzt werden oder innerhalb des Adaptergehäuses 4 integriert werden. Diese Messeinrichtungen können bei einer möglichen Ausführungsform über Daten- bzw. Busleitungen Messdaten an eine zentrale Steuereinrichtung liefern, die beispielsweise in dem Schaltschrank montiert ist. Dies erlaubt eine vollständige Kontrolle bzw. Überwachung der aufgesetzten elektrischen Geräte 2 und/oder der daran angeschlossenen Stromverbrauchseinheiten bzw. stromverbrauchenden Geräte. Die erfindungsgemäße Adaptervorrichtung 1 lässt sich mit geringem Kraftaufwand in leichter Weise auf ein bestehendes Stromsammelschienen-Hauptsystem 7 mit parallel horizontal verlaufenden Stromsammelschienen 6-i aufsetzen und dort montieren. Darüber hinaus können elektrische Geräte 2, beispielsweise Lasttrennschalter, in einfacher Weise direkt von vorne von einem Monteur aufgesetzt werden, wobei vollständiger Berührungsschutz sichergestellt ist. Dies erlaubt ein Aufstecken und Abziehen von elektrischen Geräten 2 selbst während des fortlaufenden Betriebes des Stromsammelschienensystems, ohne die Sicherheit der bedienenden Person bzw. des Monteurs zu gefährden. In einfacher Weise kann zudem erreicht werden, dass die Abgangsleitungen 19 nach oben oder nach unten abgeführt werde können, je nach Anwendungsfall. Die Breite der an der Vorderseite vorgesehenen Stromsammelschienen-Subsystemschnittstellen kann je nach Anwendungsfall variieren und ist nicht auf die in den Figuren 1 bis 36 dargestellten Ausführungsbeispiele beschränkt. Weiterhin kann ein elektrisches Gerät 2 bei einer möglichen Ausführungsform auch auf Stromsammelschienen-Subsysteme parallel montierter Adaptervorrichtungen 1 aufgesteckt werden, um Strom über verschiedene Adaptervorrichtungen 1 zu beziehen bzw. weiterzuleiten.

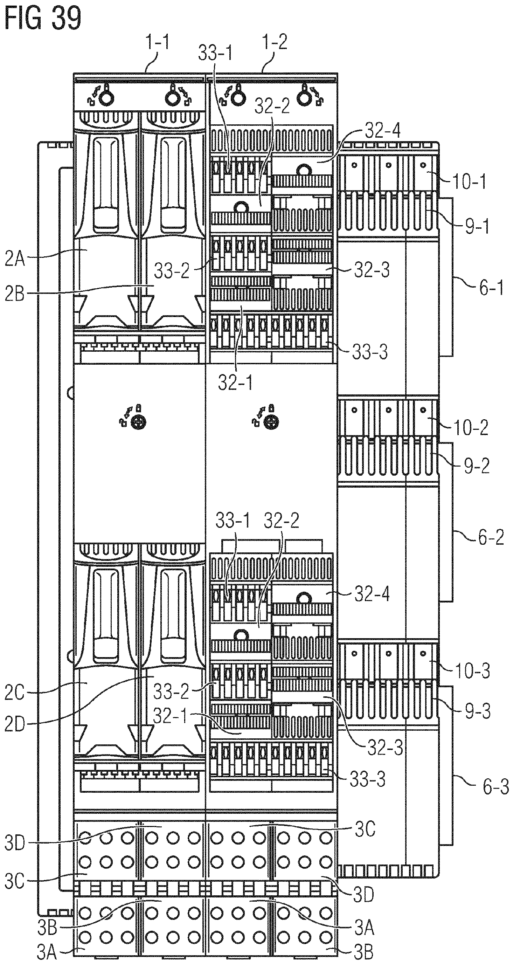

Fig. 39 zeigt eine Ansicht von vorne auf eine Anordnung der zwei erfindungsgemäßen Adaptervorrichtungen 1-1, 1-2, wobei die in Fig. 39 links dargestellte Adaptervorrichtung 1-1 mit vier Geräten 2A bis 2D bestückt ist und die in Fig. 39 rechts dargestellte Adaptervorrichtung 1-2 unbestückt ist.

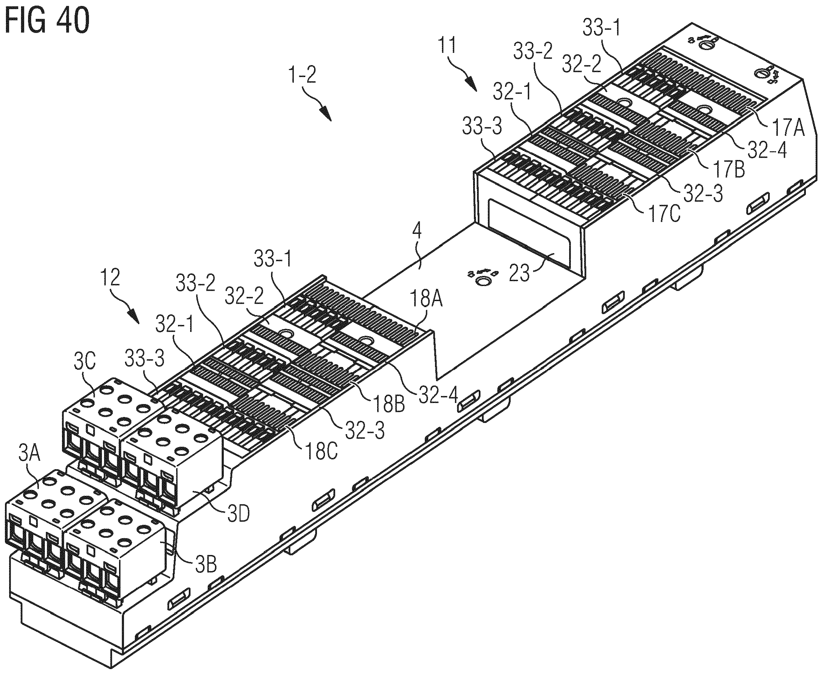

Fig. 40 zeigt eine perspektivische Ansicht auf die in Fig. 39 rechts dargestellte unbestückte Adaptervorrichtung 1-2. Die Adaptervorrichtung 1-2 besitzt zwei Stromsammelschienen-Subsysteme 11, 12 mit jeweils drei in dem Adaptergehäuse 4 integrierten Stromsammelschienen. Bei der in Fig. 40 dargestellten Anordnung sind verschiebbare Elemente bzw. Konfigurationselemente 32 vorgesehen, die jeweils zwischen zwei Stellungen hin und her schiebbar sind, um Durchführschlitze 17, 18 freizugeben oder zu bedecken. Bei dem in Fig. 40 dargestellten Ausführungsbeispiel verfügen beide Subschnittstellen der Subsysteme 11, 12 über vier manuell verschiebbare Elemente 32-1 bis 32-4. Dabei sind die Elemente 32-1, 32-2 jeweils in einer unteren Stellung befindlich dargestellt, während sich die Schiebeelemente 32-3, 32-4 in der oberen Stellung befinden. In der oberen Stellung der Schiebeelemente 32 liegen die Durchführschlitze 17 direkt oberhalb der Kontaktschlitze von darunterliegenden Stromsammelschienen der Stromsammelschienen-Subsysteme 11, 12. In der unteren Stellung der Schiebeelemente 32 werden Klemmenanschlussbereiche 33 von vorne zugänglich, wie in Fig. 40 dargestellt. Die Schiebeelemente 32 können manuell betätigt werden und zwischen verschiedenen Stellungen hin und her geschoben werden. Hierdurch ist es möglich, unterschiedliche Gerätetypen auf die Stromsammelschienen-Subsysteme 11, 12 aufzusetzen, nämlich einerseits Geräte 2 mit hervorstehenden Kontakten zum Einstecken in die Durchführschlitze 17, 18 (und die darunterliegenden Kontaktierungsschlitze der Schlitz-Stromsammelschienen bzw. Hybrid-Stromsammelschienen) und andererseits elektrische Geräte 2 mit Anschlüssen zum Einführen von Klemmbügeln in flachförmig angeschrägten Einführeinrichtungen der Klemmenanschlussbereiche 33-i, welche der Stromsammelschienen der Stromsammelschienen-Subsysteme 11, 12 hintergreifen, um eine elektrische Kontaktierung und eine mechanische Verbindung herzustellen. Die Schiebeelemente 33 können Montageöffnungen und/oder Kodieröffnungen zum Schutz vor falsch gepolten Anschluss der Geräte aufweisen.

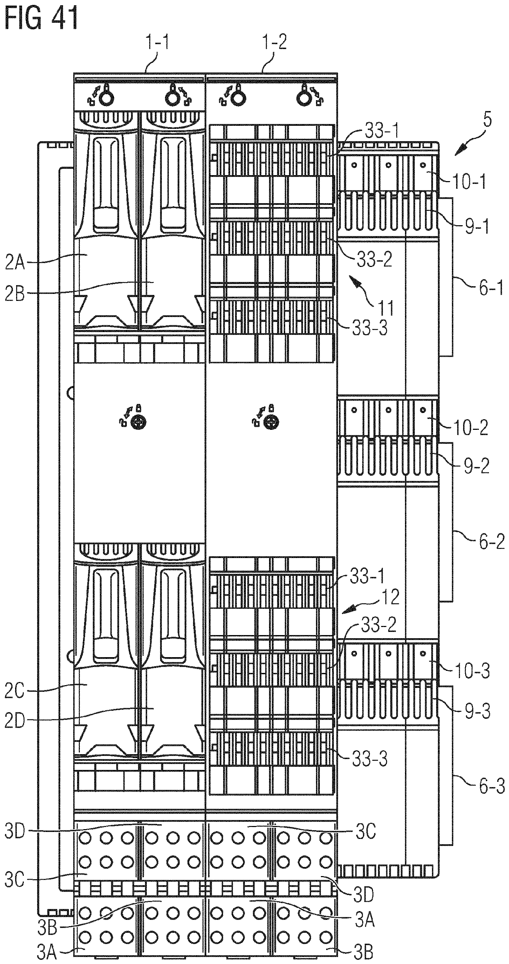

Fig. 41 zeigt ein weiteres Ausführungsbeispiel einer erfindungsgemäßen Anordnung mit einer bestückten Adaptervorrichtung 1-1 und einer unbestückten Adaptervorrichtung 1-2.

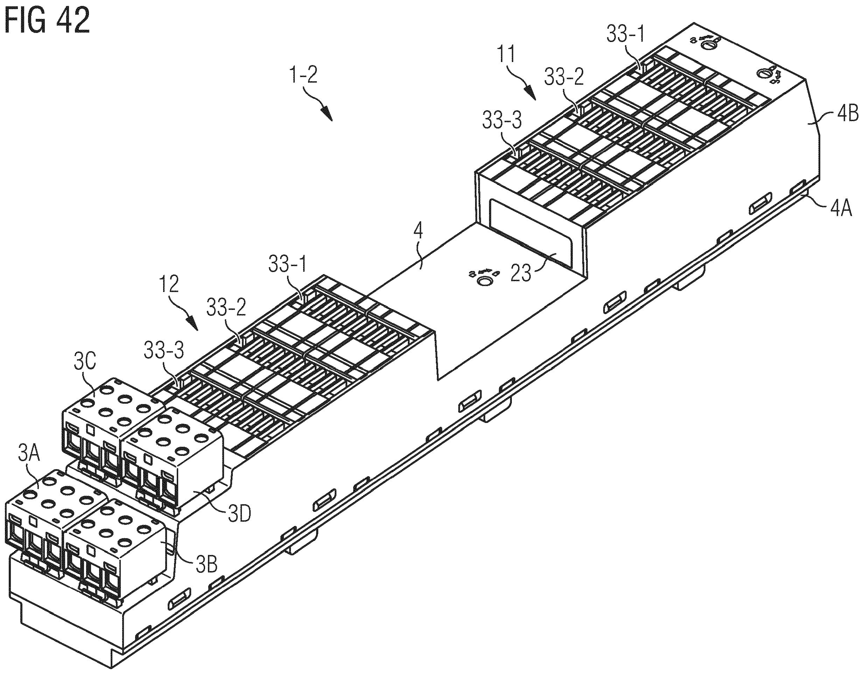

Fig. 42 zeigt eine perspektivische Ansicht auf die in Fig. 41 rechts dargestellte unbestückte Adaptervorrichtung 1-2. Bei dieser Ausführungsvariante weisen die beiden Subschnittstellen 11, 12 jeweils drei Reihen von Klemmenanschlussbereichen 33-1, 33-2-, 33-3 auf. Diese dienen zum Einführen von Klemmbügeln zum Anschließen elektrischer Geräte 2. Die Klemmenanschlussbereiche 33-1, 33-2, 33-3 können angeschrägte Einführeinrichtungen aufweisen, die zum Einführen von Klemmbügeln der Anschlussklemmen zum Anschließen der Geräte 2 dienen.

Weitere Ausführungsformen sind möglich. beispielsweise können die Stromsammelschienen, insbesondere geschlitzte Stromsammelschienen oder Hybrid-Stromsammelschienen mit einer elektrisch isolierenden Schicht zur Erhöhung des Berührungsschutzes überzogen sein. Die Kommunikation bzw. Datensignalübertragung kann bei einer möglichen Ausführungsform über die Stromsammelschienen, beispielsweise über PLC-Kommunikation erfolgen.

## Patentansprüche

1. Adaptervorrichtung (1) zum Anschluss mindestens eines elektrischen Gerätes (2), das für ein Stromsammelschienen-Subsystem (11, 12) ausgelegt ist, an ein Stromsammelschienen-Hauptsystem (7),
wobei die Adaptervorrichtung (1) ein Adaptergehäuse (4) aufweist,
wobei das Adaptergehäuse (4) der Adaptervorrichtung (1) an einer Gehäuserückseite eine Stromsammelschienen-Hauptschnittstelle (22) zur elektromechanischen Kontaktierung von Stromsammelschienen (6) des Stromsammelschienen-Hauptsystems (7) und an einer Gehäusevorderseite eine oder mehrere Stromsammelschienen-Subschnittstellen aufweist, die zum Aufsetzen des mindestens einen elektrischen Gerätes (2) auf die Adaptervorrichtung (1) und zu dessen elektrischer Verbindung mit dem Stromsammelschienen-Hauptsystem (7) über in dem Adaptergehäuse (4) integrierte oder daran angebrachte Stromsammelschienen (15, 16) des jeweiligen Stromsammelschienen-Subsystems (11, 12) und über in dem Adaptergehäuse (4) enthaltene elektrische Leiter (28) vorgesehen sind,
**dadurch gekennzeichnet, dass** die in dem Adaptergehäuse (4) integrierten Stromsammelschienen (15, 16) der Stromsammelschienen-Subsysteme (11, 12) jeweils Schlitz-Stromsammelschienen, Hybrid-Stromsammelschienen oder massive Stromsammelschienen aufweisen,
und wobei eine Wandung an der Gehäusevorderseite des Adaptergehäuses (4) im Bereich der Stromsammelschienen-Subschnittstelle Durchführschlitze (17, 18) zum Hindurchführen elektrischer Kontakte eines anzuschließenden elektrischen Gerätes (2) aufweist, die in darunterliegende Kontaktschlitze einer in dem Adaptergehäuse (4) integrierten Schlitz-Stromsammelschiene oder Hybrid-Stromsammelschiene (15, 16) zur elektrischen Kontaktierung der Stromsammelschienen (6) des Stromsammelschienen-Hauptsystems (7) einführbar sind.

2. Adaptervorrichtung nach Anspruch 1,
wobei das Adaptergehäuse (4) der Adaptervorrichtung (1) zwei voneinander trennbare Adaptergehäusehälften (4A, 4B) aufweist, die miteinander elektro-mechanisch verbunden sind, und/oder
wobei die beiden Adaptergehäusehälften (4A, 4B) eine erste Adaptergehäusehälfte (4A) an der Gehäuserückseite des Adaptergehäuses (4), welche die Stromsammelschienen-Hauptschnittstelle (22) zur elektromechanischen Kontaktierung von Stromsammelschienen (6) des Stromsammelschienen-Hauptsystems (7) aufweist, und eine zweite Adaptergehäusehälfte (4B) an der Gehäusevorderseite des Adaptergehäuses (4), welche die Stromsammelschienen-Subschnittstellen mit den in dem Adaptergehäuse (4) integrierten Stromsammelschienen (15, 16) der Stromsammelschienen-Subsysteme (11, 12) aufweist, umfassen.

3. Adaptervorrichtung nach einem der vorangehenden Ansprüche 1 bis 2,
wobei die an der Gehäuserückseite des Adaptergehäuses (4) vorgesehene Stromsammelschienen-Hauptschnittstelle (22) für jede Stromsammelschiene (6) des Stromsammelschienen-Hauptsystems (7) mindestens ein zugehöriges Kontaktbauelement (21) zur Kontaktierung der entsprechenden Stromsammelschiene (6) des Stromsammelschienen-Hauptsystems (7) aufweist, wobei an das Kontaktbauelement (21) mehrere Stromsammelschienen (15, 16) verschiedener an der Gehäusevorderseite des Adaptergehäuses (4) vorgesehener Stromsammelschienen-Subsysteme (11, 12) über in dem Adaptergehäuse (4) der Adaptervorrichtung (1) enthaltene Leiter oder Schienen (28) parallel elektrisch angeschlossen sind.

4. Adaptervorrichtung nach Anspruch 3,
wobei die Hybrid-Stromsammelschienen des Stromsammelschienen-Subsystems (11, 12) jeweils ein stromführendes Schienenprofil und ein kontaktaufnehmendes Schienenprofil umfassen, das gleichmäßig beabstandete Kontaktschlitze zur Aufnahme von elektrischen Kontakten eines elektrischen Gerätes (2) aufweist.

5. Adaptervorrichtung nach einem der vorangehenden Ansprüche 1 bis 4,
wobei das Adaptergehäuse (4) der Adaptervorrichtung (1) länglich ausgebildet ist und an der Gehäuserückseite entlang einer Längsachse des Adaptergehäuses (4) mehrere übereinander angeordnete Kontaktbauelemente (21) zur Kontaktierung mehrerer parallel in horizontaler Richtung verlaufender Stromsammelschienen (6) des Stromsammelschienen-Hauptsystems (7) aufweist.

6. Adaptervorrichtung nach einem der vorangehenden Ansprüche 2 bis 5,
wobei die erste Gehäusehälfte (4A) des Adaptergehäuses (4) mit der Stromsammelschienen-Hauptschnittstelle (22) zur elektromechanischen Kontaktierung der Stromsammelschienen (6) des Stromsammelschienen-Hauptsystems (7) auf den Stromsammelschienen (6) des Stromsammelschienen-Hauptsystems (7) fest montiert ist.

7. Adaptervorrichtung nach Anspruch 6,
wobei die zweite an der Gehäusevorderseite des Adaptergehäuses (4) vorgesehene Adaptergehäusehälfte (4B), welche die Stromsammelschienen-Subschnittstellen aufweist, von der an die Stromsammelschienen (6) des Stromsammelschienen-Hauptsystems (7) fest montierten ersten Adaptergehäusehälfte (4A) mechanisch lösbar und nach Rotation um 180° entlang einer Querachse des Adaptergehäuses (4) wieder mit der ersten Adaptergehäusehälfte (4A) mechanisch und elektrisch verbindbar ist.

8. Adaptervorrichtung nach einem der vorangehenden Ansprüche 1 bis 7,
wobei das Stromsammelschienen-Hauptsystem (7) eine Anzahl von mindestens zwei Stromsammelschienen (6) für unterschiedliche Stromphasen (L) aufweist, die in horizontaler Richtung parallel zueinander verlaufen und die jeweils durch mindestens ein Kontaktbauelement (21) des an der Gehäuserückseite des Adaptergehäuses (4) vorgesehenen Stromsammelschienen-Hauptsystems (7) zur Herstellung einer elektrischen Verbindung mit einer entsprechenden Anzahl von an der Gehäusevorderseite in dem Adaptergehäuse (4) integrierten oder daran angebrachten Stromsammelschienen verschiedener Stromsammelschienen-Subsysteme (11, 12) elektromechanisch kontaktierbar sind.

9. Adaptervorrichtung nach einem der vorangehenden Ansprüche 1 bis 8,
wobei die auf die Stromsammelschienen-Subschnittstellen aufgesetzten elektrischen Geräte (2) Abgangsleitungen (19) aufweisen, welche durch Durchführtunnel (23) hindurch in Richtung der Längsachse des Adaptergehäuses (4) hin zu einer Stirnseite des Adaptergehäuses (4) führbar sind, und wobei vorzugsweise an mindestens einer Stirnseite des Adaptergehäuses (4) Tragschienen (13, 14) zum Anbringen von Anschlussklemmblöcken (3) Zubehörbauteilen vorgesehen sind.

10. Adaptervorrichtung nach einem der vorangehenden Ansprüche 1 bis 9,
wobei die auf die Stromsammelschienen-Subschnittstellen der Adaptervorrichtung (1) aufgesetzten elektrischen Geräte (2) Sicherungs-Lasttrennschalter aufweisen, die zwischen den Stromsammelschienen (6) des Stromsammelschienen-Hauptsystems (7) und elektrischen Verbrauchsgeräten, welche an Anschlussklemmen (27) von Anschlussklemmblöcken (3) angeklemmt sind, verschaltet sind und die bei ihrer manuellen Betätigung die elektrischen Verbrauchsgeräte von den Stromsammelschienen (6) des Stromsammelschienen-Hauptsystems (7) trennen oder mit ihnen verbinden, und/oder
wobei die Stromsammelschienen (6) des Stromsammelschienen-Hauptsystems (7) eine von der Nennstromstärke der Stromsammelschienen (15, 16) der Stromsammelschienen-Subsysteme (11, 12) unterschiedliche Nennstromstärke aufweisen.

11. Adaptervorrichtung nach einem der vorangehenden Ansprüche 1 bis 10,
wobei in dem Adaptergehäuse (4) der Adaptervorrichtung (1) Strom- und/oder Spannungsmesseinheiten für jede Stromsammelschiene (6) des Stromsammelschienen-Hauptsystems (7) und/oder der Stromsammelschienen-Subsysteme (11, 12) integriert sind.

12. Adaptervorrichtung nach einem der vorangehenden Ansprüche 1 bis 11,
wobei an der Gehäusevorderseite des Adaptergehäuses (4) für die auf einer Stromsammelschienen-Subschnittstelle aufgesetzten elektrischen Geräte (2) eine Datenschnittstelle zur Weiterleitung und/oder Verteilung von Signalen eines Bussystems vorgesehen ist.

13. Adaptervorrichtung nach einem der vorangehenden Ansprüche 1 bis 12,
wobei Anschlussklemmblöcke (3) zum Anschluss von elektrischen Verbrauchsgeräten an die Adaptervorrichtung (1) vorgesehen sind, die über Stromleiter oder Stromschienen (19) mit den auf die Adaptervorrichtung (1) aufgesetzten elektrischen Geräten (2) verbunden sind, und wobei vorzugsweise Strommesseinheiten vorgesehen sind, welche die durch die Stromleiter oder Stromschienen (19) zu den angeschlossenen elektrischen Verbrauchsgeräten fließenden elektrischen Ströme messen.

## Claims

1. Adapter device (1) for connecting at least one electrical device (2) configured for a busbar subsystem (11, 12) to a busbar main system (7),
the adapter device (1) comprising an adapter housing (4), the adapter housing (4) of the adapter device (1) having, on a rear housing face, a busbar main interface (22) for electromechanically contacting busbars (6) of the busbar main system (7) and, on a front housing face, one or more busbar sub-interfaces, provided for placing the at least one electrical device (2) on the adapter device (1) and for electrically connecting it to the busbar main system (7) via busbars (15, 16), integrated into or attached to the adapter housing (4), of the relevant busbar subsystem (11, 12) and via electrical conductors (28) contained in the adapter housing (4),
**characterised in that** the busbars (15, 16), integrated into the adapter housing (4), of the busbar subsystems (11, 12) each comprise slot busbars, hybrid busbars or solid busbars,
and a wall on the front housing face of the adapter housing (4) having, in the region of the busbar sub-interface, through-slots (17, 18) for passing through electrical contacts of an electrical device (2) to be connected, which are introducible into contact slots, positioned below, of a slot busbar or hybrid busbar (15, 16) integrated into the adapter housing (4) for electrically contacting the busbars (6) of the busbar main system (7).

2. Adapter device according to claim 1,
wherein the adapter housing (4) of the adapter device (1) has two mutually separable adapter housing halves (4A, 4B) which can be electromechanically interconnected, and/or wherein the two adapter housing halves (4A, 4B) comprise a first adapter housing half (4A) on the rear housing face of the adapter housing (4), which has the busbar main interface (22) for electromechanically contacting busbars (6) of the busbar main system (7), and a second adapter housing half (4B) on the front housing face of the adapter housing (4), which has the busbar sub-interfaces with the busbars (15, 16), integrated into the adapter housing (4), of the busbar subsystems (11, 12).

3. Adapter device according to either of preceding claims 1 to 2,
wherein the busbar main interface (22), provided on the rear housing face of the adapter housing (4), has, for each busbar (6) of the busbar main system (7), at least one associated contact component (21) for contacting the corresponding busbar (6) of the busbar main system (7), a plurality of busbars (15, 16) of different busbar subsystems (11, 12) provided on the front housing face of the adapter housing (4) being electrically connected to the contact component (21) in parallel via conductors or rails (28) contained in the adapter housing (4) of the adapter device (1).

4. Adapter device according to claim 3,
wherein the hybrid busbars of the busbar subsystem (11, 12) each comprise a current-carrying rail profile and a contact-receiving rail profile, which has uniformly spaced contact slots for receiving electrical contacts of an electrical device (2).

5. Adapter device according to any of preceding claims 1 to 4,
wherein the adapter housing (4) of the adapter device (1) is formed elongate and has, on the rear housing face, along a longitudinal axis of the adapter housing (4), a plurality of contact components (21) arranged above one another for contacting a plurality of busbars (6), extending parallel horizontally, of the busbar main system (7).

6. Adapter device according to any of preceding claims 2 to 5,
wherein the first housing half (4A) of the adapter housing (4) is fixedly mounted on the busbars (6) of the busbar main system (7) by way of the busbar main interface (22) for electromechanically contacting the busbars (6) of the busbar main system (7).

7. Adapter device according to claim 6, wherein the second adapter housing half (4B) provided on the adapter housing (4) and having the busbar sub-interfaces is mechanically detachable from the first adapter housing half (4A) fixedly mounted on the busbars (6) of the busbar main system (7) and, after rotation through 180° along a transverse axis of the adapter housing (4) can be mechanically and electrically connected to the first adapter housing half (4A) again.

8. Adapter device according to any of preceding claims 1 to 7,
wherein the busbar main system (7) has a number of at least two busbars (6) for different current phases (L), which extend horizontally mutually parallel and which can each be electromechanically contacted by at least one contact component (21) of the busbar main system (7) provided on the rear housing face of the adapter housing (4) to establish an electrical connection to a corresponding number of busbars, integrated into or attached to the adapter housing (4) on the front housing face, of different busbar subsystems (11, 12).

9. Adapter device according to any of preceding claims 1 to 8,
wherein the electrical devices (2) placed on the busbar sub-interfaces have outlet lines (19) which can be passed through through-tunnels (23) in the direction of the longitudinal axis of the adapter housing (4) towards an end face of the adapter housing (4), and wherein carrier rails (13, 14) for attaching terminal blocks (3) accessory parts are provided on at least one end face of the adapter housing (4) .

10. Adapter device according to any of preceding claims 1 to 9,
wherein the electrical devices (2) placed on the busbar sub-interfaces of the adapter device (1) have safety load-break switches, which are connected between the busbars (6) of the busbar main system (7) and electrical consumer devices connected at terminals (27) of terminal blocks (3), and which, when manually actuated, separate or connect the electrical consumer devices from or to the busbars (6) of the busbar main system (7), and/or
wherein the busbars (6) of the busbar main system (7) have a nominal current level differing from the nominal current level of the busbars (15, 16) of the busbar subsystems (11, 12) .

11. Adapter device according to any of preceding claims 1 to 10,
wherein current and/or voltage measurement units for each busbar (6) of the busbar main system (7) and/or of the busbar subsystems (11, 12) are integrated into the adapter housing (4) of the adapter device (1).

12. Adapter device according to any of preceding claims 1 to 11,
wherein a data interface for passing on and/or distributing signals of a bus system is provided on the front housing face of the adapter housing (4) for the electrical devices (2) placed on a busbar sub-interface.

13. Adapter device according to any of preceding claims 1 to 12,
wherein terminal blocks (3) are provided for connecting electrical consumer devices to the adapter device (1) and are connected via current conductors or busbars (19) to the electrical devices (2) placed on the adapter device (1), and wherein current measurement units, which measure the electric currents flowing through the current conductors or busbars (19) to the connected electrical consumer devices, are preferably provided.

## Revendications

1. Dispositif adaptateur (1) destiné à raccorder au moins un appareil électrique (2) qui est conçu pour un sous-système de barres omnibus (11, 12), à un système principal de barres omnibus (7),
dans lequel le dispositif adaptateur (1) comporte un boîtier d'adaptateur (4),
dans lequel le boîtier d'adaptateur (4) du dispositif adaptateur (1) comporte une interface principale de barre omnibus (22) sur un côté arrière de boîtier pour mettre électromécaniquement en contact des barres omnibus (6) du système principal de barres omnibus (7), et une ou plusieurs sous-interfaces de barres omnibus sur un côté avant de boîtier qui sont destinées à placer le au moins un appareil électrique (2) sur le dispositif adaptateur (1) et à le raccorder électriquement au système principal de barres omnibus (7) par l'intermédiaire de barres omnibus (15, 16) du sous-système de barres omnibus (11, 12) respectif, intégrées dans le boîtier d'adaptateur (4) ou fixées à celui-ci, et de conducteurs électriques (28) contenus dans le boîtier d'adaptateur (4),
**caractérisé en ce que** les barres omnibus (15, 16) des sous-systèmes de barres omnibus (11, 12) intégrées dans le boîtier d'adaptateur (4) comportent respectivement des barres omnibus à fentes, des barres omnibus hybrides ou des barres omnibus massives,
et dans lequel une paroi située sur le côté avant de boîtier du boîtier d'adaptateur (4) comporte, dans la zone de la sous-interface de barre omnibus, des fentes de passage (17, 18) pour faire passer des contacts électriques d'un appareil électrique (2) à raccorder, qui peuvent être insérés dans des fentes de contact situées en dessous d'une barre omnibus à fentes intégrée dans le boîtier d'adaptateur (4) ou d'une barre omnibus hybride (15, 16) pour venir électriquement en contact avec les barres omnibus (6) du système principal de barres omnibus (7).

2. Dispositif adaptateur selon la revendication 1,
dans lequel le boîtier d'adaptateur (4) du dispositif adaptateur (1) comporte deux demi-boîtiers d'adaptateur (4A, 4B) séparables l'un de l'autre, qui sont assemblés l'un à l'autre de manière électromécanique, et/ou dans lequel les deux demi-boîtiers d'adaptateur (4A, 4B) comprennent un premier demi-boîtier d'adaptateur (4A) sur le côté arrière de boîtier du boîtier d'adaptateur (4) qui comporte l'interface de barre omnibus principale (22) pour mettre électromécaniquement en contact des barres omnibus (6) du système principal de barres omnibus (7), et un second demi-boîtier d'adaptateur (4B) sur le côté avant de boîtier du boîtier d'adaptateur (4) qui comporte les sous-interfaces de barre omnibus avec les barres omnibus (15, 16) des sous-systèmes de barres omnibus (11, 12) intégrées dans le boîtier d'adaptateur (4).

3. Dispositif adaptateur selon l'une des revendications 1 à 2 précédentes,
dans lequel l'interface de barre omnibus principale (22) prévue sur le côté arrière de boîtier du boîtier d'adaptateur (4) pour chaque barre omnibus (6) du système principal de barres omnibus (7) comporte au moins un composant de contact (21) associé pour venir en contact avec la barre omnibus (6) correspondante du système principal de barres omnibus (7), dans lequel plusieurs barres omnibus (15, 16) de différents sous-systèmes de barres omnibus (11, 12) prévus sur le côté avant de boîtier du boîtier d'adaptateur (4) sont électriquement raccordées en parallèle au composant de contact (21) par l'intermédiaire de conducteurs ou de barres (28) contenus dans le boîtier d'adaptateur (4) du dispositif adaptateur (1) .

4. Dispositif adaptateur selon la revendication 3,
dans lequel les barres omnibus hybrides du sous-système de barres omnibus (11, 12) comprennent respectivement un profilé de barre conducteur de courant et un profilé de barre récepteur de contacts qui comporte des fentes de contact espacées uniformément pour recevoir des contacts électriques d'un appareil électrique (2).

5. Dispositif adaptateur selon l'une des revendications 1 à 4 précédentes,
dans lequel le boîtier d'adaptateur (4) du dispositif adaptateur (1) est formé longitudinalement et comporte, sur le côté arrière de boîtier, le long d'un axe longitudinal du boîtier d'adaptateur (4), plusieurs composants de contact (21) agencés les uns au-dessus des autres pour venir en contact avec plusieurs barres omnibus (6) du système principal de barres omnibus (7) s'étendant parallèlement dans une direction horizontale.

6. Dispositif adaptateur selon l'une des revendications 2 à 5 précédentes,
dans lequel le premier demi-boîtier (4A) du boîtier d'adaptateur (4) ayant l'interface de barre omnibus principale (22) pour venir en contact électromécanique avec des barres omnibus (6) du système principal de barres omnibus (7) est monté fixement sur les barres omnibus (6) du système principal de barres omnibus (7).

7. Dispositif adaptateur selon la revendication 6,
dans lequel le second demi-boîtier d'adaptateur (4B) prévu sur le côté avant de boîtier du boîtier d'adaptateur (4) et qui comporte les sous-interfaces de barres omnibus peut être mécaniquement détaché du premier demi-boîtier d'adaptateur (4A) monté fixement sur les barres omnibus (6) du système principal de barres omnibus (7) et, après une rotation de 180° le long d'un axe transversal du boîtier d'adaptateur (4), peut être de nouveau raccordé mécaniquement et électriquement au premier demi-boîtier d'adaptateur (4A).

8. Dispositif adaptateur selon l'une des revendications 1 à 7 précédentes,
dans lequel le système principal de barres omnibus (7) comporte un nombre d'au moins deux barres omnibus (6) pour différentes phases de courant (L) qui s'étendent parallèlement l'une à l'autre dans la direction horizontale et qui peuvent être respectivement mises en contact électromécanique par au moins un composant de contact (21) du système principal de barres omnibus (7) prévu sur le côté arrière de boîtier du boîtier d'adaptateur (4), afin d'établir une connexion électrique avec un nombre correspondant de barres omnibus de différents sous-systèmes de barres omnibus (11, 12) intégrées dans le boîtier d'adaptateur (4) sur le côté avant de boîtier ou appliquées sur celui-ci.

9. Dispositif adaptateur selon l'une des revendications 1 à 8 précédentes,
dans lequel les appareils électriques (2) placés sur les sous-interfaces de barres omnibus comportent des lignes de sortie (19) qui peuvent être guidées à travers des tunnels de passage (23) en direction de l'axe longitudinal du boîtier d'adaptateur (4) jusqu'à une face d'extrémité du boîtier d'adaptateur (4), et dans lequel des barres omnibus (13, 14) sont de préférence prévues sur au moins une face d'extrémité du boîtier d'adaptateur (4) pour fixer des borniers de raccordement (3) ou d'autres composants auxiliaires.

10. Dispositif adaptateur selon l'une des revendications 1 à 9 précédentes,
dans lequel les appareils électriques (2) montés sur les sous-interfaces de barres omnibus du dispositif adaptateur (1) comportent des fusibles-interrupteurs qui sont interconnectés entre les barres omnibus (6) du système principal de barres omnibus (7) et des appareils à consommation électrique qui sont raccordés à des bornes (27) des borniers de raccordement (3) et qui, lorsqu'ils sont actionnés manuellement, séparent les appareils à consommation électrique des barres omnibus (6) du système principal de barres omnibus (27) ou les raccordent à celles-ci, et/ou
dans lequel les barres omnibus (6) du système principal de barres omnibus (7) ont une intensité de courant nominal différente de l'intensité de courant nominal des barres omnibus (15, 16) des sous-systèmes de barres omnibus (11, 12) .

11. Dispositif adaptateur selon l'une des revendications 1 à 10 précédentes,
dans lequel dans le boîtier d'adaptateur (4) du dispositif adaptateur (1) sont intégrées des unités de mesure de courant et/ou de tension pour chaque barre omnibus (6) du système principal de barres omnibus (7) et/ou des sous-systèmes de barres omnibus (11, 12).

12. Dispositif adaptateur selon l'une des revendications 1 à 11 précédentes,
dans lequel une interface de données pour la transmission et/ou la distribution de signaux d'un système de bus est prévue sur le côté avant de boîtier du boîtier d'adaptateur (4) pour les appareils électriques (2) placés sur une sous-interface de barre omnibus.

13. Dispositif adaptateur selon l'une des revendications 1 à 12 précédentes,
dans lequel des borniers de raccordement (3) sont prévus pour raccorder des appareils à consommation électrique au dispositif adaptateur (1), lesquels borniers sont reliés aux appareils électriques (2) placés sur le dispositif adaptateur (1) par des conducteurs de courant ou des barres omnibus (19), et dans lequel des unités de mesure de courant sont de préférence prévues, lesquelles unités mesurent les courants électriques circulant à travers les conducteurs de courant ou les barres omnibus (19) jusqu'aux appareils à consommation électrique raccordés.
